(19) Europäisches Patentamt / European Patent Office / Office européen des brevets

(11) **EP 4 753 154 A1**

(12) **EUROPEAN PATENT APPLICATION**
published in accordance with Art. 153(4) EPC

(43) Date of publication:
**03.06.2026 Bulletin 2026/23**

(21) Application number: **24870215.1**

(22) Date of filing: **19.08.2024**

(51) International Patent Classification (IPC):
***H04B 1/04*** (2006.01)

(52) Cooperative Patent Classification (CPC):
**H04B 1/04; H04B 1/10; H04B 17/391**

(86) International application number:
**PCT/CN2024/113172**

(87) International publication number:
**WO 2025/066669 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.09.2023 CN 202311273519**

(71) Applicant: **HUAWEI TECHNOLOGIES CO., LTD.**
**Shenzhen, Guangdong 518129 (CN)**

(72) Inventors:
• **YANG, Rui**
**Shenzhen, Guangdong 518129 (CN)**
• **QIN, Cheng**
**Shenzhen, Guangdong 518129 (CN)**
• **WANG, Sihai**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **COMMUNICATION METHOD AND APPARATUS**

(57) This application provides a communication method and apparatus, which may be used in the field of wireless communication technologies, so that a compensation model can match a power amplifier PA in actual operation to accurately compensate for non-linear distortion caused by the PA to a signal, without approximate mathematical modeling on the PA. The method includes: A first device receives a first signal and first information. The first signal is a signal obtained by a first PA through amplification processing using a first gain, and the first information indicates the first gain. The first device determines a first compensation model based on the first signal and the first gain. The first compensation model is used to compensate for non-linear distortion, and the non-linear distortion includes non-linear distortion caused to a signal by the first PA in a process of performing amplification processing by using the first gain. For example, the first compensation model is a digital pre-distortion DPD model.

_600_

```
 First device                          Second device
      │                                      │
      │◄─ S601: First signal and first information, where
      │   the first signal is a signal obtained by a first PA through
      │   amplification processing using a first gain, and
      │   the first information indicates the first gain
      │
 ┌────┴───────────────────────────────────────────┐
 │ S602: Determine a first compensation model based on the first │
 │            signal and the first gain                         │
 └────┬───────────────────────────────────────────┘
      │
      │─ S603: First parameter, where
      │  the first parameter indicates a difference between the
      │  first signal and an ideal signal
      │- - - - - - - - - - - - - - - - - - - - - ►│
```

FIG. 6

## Description

This application claims priority to Chinese Patent Application No. 202311273519.2, filed with the China National Intellectual Property Administration on September 27, 2023 and entitled "COMMUNICATION METHOD AND APPARATUS", which is incorporated herein by reference in its entirety.

## TECHNICAL FIELD

This application relates to the field of wireless communication, and in particular, to a communication method and apparatus.

## BACKGROUND

Digital pre-distortion (digital pre-distortion, DPD) means performing digital pre-distortion on a signal before the signal enters a power amplifier (power amplifier, PA), to compensate for non-linear distortion generated by the PA. A conventional DPD model is established depending on approximate mathematical modeling on the PA, but the approximate mathematical modeling cannot be used to accurately describe non-linear distortion of the PA in different operating states. In this case, the conventional DPD model cannot match the PA in actual operation. Consequently, the conventional DPD model cannot accurately compensate for non-linear distortion caused by the PA to a signal.

## SUMMARY

To resolve the foregoing technical problem, this application provides a communication method and apparatus, so that a compensation model can match a power amplifier PA in actual operation to accurately compensate for non-linear distortion caused by the PA to a signal, without approximate mathematical modeling on the PA.

To achieve the foregoing objective, the following technical solutions are used in this application:

According to a first aspect, a communication method is provided. The method may be performed by a first device, or may be performed by a module (for example, a processor, a chip, or a chip system) used in the first device. The following uses an example in which the first device performs the method for description. The method includes: The first device receives a first signal and first information. The first signal is a signal obtained by a first power amplifier PA through amplification processing using a first gain, and the first information indicates the first gain. The first device determines a first compensation model based on the first signal and the first gain. The first compensation model is used to compensate for non-linear distortion, and the non-linear distortion includes non-linear distortion caused to a signal by the first PA in a process of performing amplification processing by using the first gain.

For example, the first signal may include a data signal, or may include a reference signal or the like.

That is, after receiving the first signal and the first information, the first device determines, based on the first signal and the first information, the first compensation model used to compensate for non-linear distortion. Because the first signal is a signal obtained by the first PA through amplification processing using the first gain, the first signal can present non-linear distortion caused to a signal by the first PA in a specific operating state. In addition, the first gain indicated by the first information can enable the first device to determine an ideal signal obtained through ideal linear amplification, that is, a signal without non-linear distortion generated. Correspondingly, the first device can learn of a difference between the actually received first signal and the ideal signal, and then determine the first compensation model based on the difference between the first signal and the ideal signal. In this way, the first compensation model can match the first PA in actual operation, to accurately compensate for non-linear distortion caused by the first PA to a signal, without approximate mathematical modeling on the first PA. This helps to enable high quadrature amplitude modulation QAM and improve transmission efficiency of a communication system.

In a possible design, the first signal includes a signal obtained by the first PA through amplification processing using the first gain in a non-linear region.

That is, a part of or all signals of the first signal are signals obtained through amplification processing in the non-linear region of the first PA. Non-linear distortion of the signal obtained through amplification processing in the non-linear region of the first PA is obvious. In this way, the first device may determine the first compensation model based on the signal with obvious non-linear distortion. This helps to improve accuracy of the compensation model.

In a possible design, the first signal includes a first reference signal and a second reference signal. The first reference signal and the second reference signal are adjacent in time domain and/or frequency domain. Power of the first reference signal is first power, and the first power is in a linear region of the first PA. Power of the second reference signal is second power, and the second power is in a non-linear region of the first PA.

That is, the first reference signal and the second reference signal are adjacent in time domain and/or frequency domain, so that radio channel characteristics in transmitting the first reference signal and the second reference signal are the same or similar. In this way, the first device may perform channel estimation based on the first reference signal, perform channel estimation based on the second reference signal, and determine the first compensation model based on channel estimation results of the second reference signal and the first reference signal. This helps to improve accuracy of the compensation model.

In a possible design, the first gain is associated with a first operating state of the first PA, and the first operating state is an operating state when the first PA performs amplification processing on the first signal by using the first gain.

In a possible design, the non-linear distortion compensated for by the first compensation model includes non-linear distortion caused to a signal by the first PA in the first operating state in a process of performing amplification processing by using the first gain.

In this application, because non-linear distortion of the first PA is affected by an operating state of the first PA, the first compensation model determined by the first device is also related to an operating state of the first PA. For example, the first compensation model matches the first PA in the first operating state, that is, the first compensation model can compensate for non-linear distortion caused to a signal by the first PA in the first operating state. This improves accuracy of the compensation model.

In a possible design, the first operating state includes at least one of the following: an operating frequency of the first PA, an operating bandwidth of the first PA, a temperature of the first PA, output power of the first PA, or a radio access technology RAT used by the first PA.

In a possible design, the method further includes: The first device receives a second signal and second information. The second signal is a signal obtained by the first PA in a second operating state through amplification processing using a second gain, and the second information indicates the second gain.

The first device determines a second compensation model based on the second signal and the second gain. The second compensation model is used to compensate for non-linear distortion, and the non-linear distortion compensated for by the second compensation model includes non-linear distortion caused to a signal by the first PA in the second operating state in a process of performing amplification processing by using the second gain.

In this application, because non-linear distortion of the first PA is affected by an operating state of the first PA, the second compensation model determined by the first device is also related to an operating state of the first PA. For example, the second compensation model matches the first PA in the second operating state, that is, the second compensation model can compensate for non-linear distortion caused to a signal by the first PA in the second operating state. This improves accuracy of the compensation model.

That is, the first device trains different compensation models, for example, the first compensation model and the second compensation model, for the same PA in different operating states, so that the compensation models match the operating states of the first PA, to compensate for non-linear distortion caused to signals by the first PA in the different operating states.

In a possible design, the first compensation model is at least partially the same as the second compensation model.

For example, when a compensation model (for example, the first compensation model and/or the second compensation model) includes a static part and a dynamic part, the static part of the compensation model is used to compensate for non-linear distortion caused to a signal when the PA is affected by a hardware structure, and the dynamic part of the compensation model is used to compensate for non-linear distortion caused to a signal when the PA is affected by an operating state. In this way, two compensation models (for example, the first compensation model and the second compensation model) trained for different operating states of a same PA are at least partially the same. This helps to reduce an operational amount of the first device.

In a possible design, the method further includes: The first device receives a third signal and third information. The third signal is a signal obtained by a second PA through amplification processing using a third gain, and the third information indicates the third gain.

The first device determines a third compensation model based on the third signal and the third gain. The third compensation model is used to compensate for non-linear distortion, and the non-linear distortion compensated for by the third compensation model includes non-linear distortion caused to a signal by the second PA in a process of performing amplification processing by using the third gain. The first PA and the second PA have different hardware structures, and the first compensation model is at least partially different from the third compensation model.

In this application, because non-linear distortion of a PA is affected by both a hardware structure of the PA and an operating state of the PA, the third compensation model determined by the first device is also related to the hardware structure of the PA. For example, the third compensation model matches the second PA, that is, the third compensation model can compensate for non-linear distortion caused by the second PA to a signal. This improves accuracy of the compensation model. That is, the first device trains different compensation models for PAs of different hardware structures, so that the compensation models match the hardware structures of the PAs, to compensate for non-linear distortion caused to signals by the PAs of the different hardware structures.

In a possible design, that the first compensation model is used to compensate for non-linear distortion includes:

The first compensation model is used to compensate for the non-linear distortion after the first PA performs the amplification processing process by using the first gain.

That is, the first compensation model may post-compensate for the non-linear distortion.

In a possible design, that the first compensation model is used to compensate for non-linear distortion includes: The first compensation model is used to compensate for the non-linear distortion before the first PA performs the amplification processing process by using the first gain.

That is, the first compensation model may pre-compensate for the non-linear distortion.

In a possible design, that the first compensation model is used to compensate for non-linear distortion includes: The first compensation model includes a phase distortion compensation model and/or an amplitude distortion compensation model, the phase distortion compensation model is used to compensate for phase distortion in the non-linear distortion, and the amplitude distortion compensation model is used to compensate for amplitude distortion in the non-linear distortion.

In a possible design, the non-linear distortion compensated for by the first compensation model includes phase distortion, and the first compensation model meets:

$$f_{AM-PM}(x) = -\frac{Ax^q}{\left(1 + \left(\frac{x}{B}\right)^q\right)}$$

where $x$ represents an amplitude of an input signal of the first compensation model, $f_{AM-PM}(x)$ represents an output signal of the first compensation model, and $A, B,$ and $q$ represent model parameters of the first compensation model.

In a possible design, the non-linear distortion compensated for by the first compensation model includes phase distortion, and the first compensation model meets:

$$f_{AM-PM}(x) = -(p_0 + p_1 x^1 + p_2 x^2 + \cdots + p_9 x^9)$$

where $x$ represents an amplitude of an input signal of the first compensation model, $f_{AM-PM}(x)$ represents an output signal of the first compensation model, and $p_0, p_1, ...,$ and $p_9$ represent model parameters of the first compensation model.

In a possible design, the non-linear distortion compensated for by the first compensation model includes amplitude distortion, and the first compensation model meets:

$$f_{AM-AM}(x) = \frac{x}{\left(1 - \left(\frac{Gx}{V}\right)^{2p}\right)^{\frac{1}{2p}}}$$

where $x$ represents an amplitude of an input signal of the first compensation model, $f_{AM-AM}(x)$ represents an output signal of the first compensation model, and $G, V,$ and $p$ represent model parameters of the first compensation model.

In a possible design, the non-linear distortion compensated for by the first compensation model includes amplitude distortion, and the first compensation model meets:

$$f_{AM-AM}(x) = (a_0 + a_1 x^1 + a_2 x^2 + \cdots + a_9 x^9)$$

where $x$ represents an amplitude of an input signal of the first compensation model, $f_{AM-AM}(x)$ represents an output signal of the first compensation model, and $a_0, a_1, ...,$ and $a_9$ represent model parameters of the first compensation model.

In a possible design, the first signal is a signal below 6 GHz, or the first signal is a signal above 6 GHz.

In a possible design, that the first device determines the first compensation model based on the first signal and the first gain includes: determining an ideal linearly amplified signal based on the first gain, and determining the first compensation model based on a difference between the first signal and the ideal signal.

In this application, the ideal signal may be understood as a signal that does not include non-linear distortion.

That is, the first compensation model is determined based on the difference between the first signal and the ideal signal. In this way, the first compensation model can match the first PA in actual operation, to accurately compensate for non-linear distortion caused by the first PA to a signal, without approximate mathematical modeling on the first PA.

In a possible design, after the first device determines the first compensation model based on the first signal and the first gain, the method further includes: The first device sends a first parameter. The first parameter indicates the difference between the first signal and the ideal signal.

In this way, a receive-end device of the first parameter can also determine the first compensation model based on the first parameter.

According to a second aspect, a communication method is provided. The method may be performed by a first device, or may be performed by a module (for example, a processor, a chip, or a chip system) used in the first device. The following uses an example in which the first device performs the method for description. The method includes: The first device receives a fourth signal and fourth information. The fourth signal is a signal obtained by a first power amplifier PA through amplification processing using a first gain, and the fourth information indicates the first gain. The first device determines a detection result of a first compensation model based on the fourth signal and the first gain. The first compensation model is used to compensate for non-linear distortion, the non-linear distortion includes non-linear distortion caused to a signal by the first PA in a process of performing amplification processing by using the first gain, and the detection result of the first compensation model indicates whether the first compensation model runs normally.

That is, in a process of applying the first compensation model, the first device can determine, based on the received fourth signal and fourth information, whether the first compensation model runs normally, thereby achieving an effect of monitoring a running status of the compensation model. For example, if the first compensation model runs abnormally, a communication system may perform processing in time. This helps to improve performance of the communication system.

In a possible design, after the first device determines the detection result of the first compensation model based on the fourth signal and the first gain, the method further includes: The first device sends a second parameter. The second parameter indicates a difference between the fourth signal and an ideal signal.

In this way, a receive-end device of the second parameter can also update or train a compensation model based on the second parameter.

In a possible design, after the first device determines the detection result of the first compensation model based on the fourth signal and the first gain, the method further includes: The first device sends the detection result of the first compensation model.

That is, the first device feeds back the detection result of the first compensation model, so that a receive-end device of the detection result learns of the running status of the first compensation model, thereby achieving an effect of monitoring the running status of the compensation model.

According to a third aspect, a communication method is provided. The method may be performed by a first device, or may be performed by a module (for example, a processor, a chip, or a chip system) used in the first device. The following uses an example in which the first device performs the method for description. The method includes: The first device sends a fifth signal. The fifth signal is a signal obtained by a first power amplifier PA through amplification processing. The first device receives fifth information. The fifth information indicates a difference between the fifth signal and a first ideal signal. The first device determines a fourth compensation model based on the difference between the fifth signal and the first ideal signal. The fourth compensation model is used to compensate for non-linear distortion, and the non-linear distortion includes non-linear distortion caused to a signal by the first PA in a process of performing amplification processing.

For example, the fifth signal may include a data signal, or may include a reference signal or the like.

In this application, the first understanding signal may be understood as a signal obtained through ideal linear amplification processing, and does not include non-linear distortion.

That is, after sending the fifth signal, the first device can receive the fifth information, and then determine, based on the difference (that is, the difference between the fifth signal and the first ideal signal) indicated by the fifth information, the fourth compensation model used to compensate for non-linear distortion. Because the fifth signal is a signal obtained by the first PA through amplification processing, the fifth signal can present non-linear distortion caused to a signal by the first PA in a specific operating state. In addition, the fifth information indicates the difference between the fifth signal and the first ideal signal, so that the first device determines the fourth compensation model based on the difference between the fifth signal and the first ideal signal. In this way, the fourth compensation model can match the first PA in actual operation, to accurately compensate for non-linear distortion caused by the first PA to a signal, without approximate mathematical modeling on the first PA. This helps to enable high quadrature amplitude modulation QAM and improve transmission efficiency of a communication system.

In a possible design, the fifth information includes a first error vector magnitude EVM, and the first EVM is used to represent the difference between the fifth signal and the first ideal signal.

In a possible design, the fifth information is associated with a first operating state of the first PA, and the first operating state is an operating state when the first PA performs amplification processing on the fifth signal.

In a possible design, the non-linear distortion compensated for by the fourth compensation model includes non-linear distortion caused to a signal by the first PA in the first operating state in a process of performing amplification processing.

In this application, because non-linear distortion of the first PA is affected by an operating state of the first PA, the fourth compensation model determined by the first device is also related to an operating state of the first PA. For example, the fourth compensation model matches the first PA in the first operating state, that is, the fourth compensation model can compensate for non-linear distortion caused to a signal by the first PA in the first operating state. This improves accuracy of the compensation model.

In a possible design, the first operating state includes at least one of the following: an operating frequency of the first PA, an operating bandwidth of the first PA, a temperature of the first PA, output power of the first PA, or a radio access technology RAT used by the first PA.

In a possible design, the method further includes: The first device sends a sixth signal. The sixth signal is a signal obtained by the first PA in a second operating state through amplification processing. The first operating state is different from the second operating state.

The first device receives sixth information. The sixth information indicates a difference between the sixth signal and a second ideal signal.

The first device determines a fifth compensation model based on the difference between the sixth signal and the second ideal signal. The fifth compensation model is used to compensate for non-linear distortion, and the non-linear distortion compensated for by the fifth compensation model includes non-linear distortion caused to a signal by the first PA in the second operating state in a process of performing amplification processing.

In this application, because non-linear distortion of the first PA is affected by an operating state of the first PA, the fifth compensation model determined by the first device is also related to an operating state of the first PA. For example, the fifth compensation model matches the first PA in the second operating state, that is, the fifth compensation model can compensate for non-linear distortion caused to a signal by the first PA in the second operating state. This improves accuracy of the compensation model.

That is, the first device trains different compensation models, for example, the fourth compensation model and the fifth compensation model, for the same PA in different operating states, so that the compensation models match the operating states of the first PA, to compensate for non-linear distortion caused to signals by the first PA in the different operating states.

In a possible design, the fourth compensation model is at least partially the same as the fifth compensation model.

For example, when a compensation model (for example, the fourth compensation model and/or the fifth compensation model) includes a static part and a dynamic part, the static part of the compensation model is used to compensate for non-linear distortion caused to a signal when the PA is affected by a hardware structure, and the dynamic part of the compensation model is used to compensate for non-linear distortion caused to a signal when the PA is affected by an operating state. In this way, two compensation models (for example, the fourth compensation model and the fifth compensation model) trained for different operating states of a same PA are at least partially the same. This helps to reduce an operational amount of the first device.

In a possible design, the method further includes: The first device sends a seventh signal. The seventh signal is a signal obtained by a second PA through amplification processing.

The first device receives seventh information. The seventh information indicates a difference between the seventh signal and a third ideal signal.

The first device determines a sixth compensation model based on the difference between the seventh signal and the third ideal signal. The sixth compensation model is used to compensate for non-linear distortion, and the non-linear distortion compensated for by the sixth compensation model includes non-linear distortion caused to a signal by the second PA in a process of performing amplification processing. The first PA and the second PA have different hardware structures, and the fourth compensation model is at least partially different from the sixth compensation model.

In this application, because non-linear distortion of a PA is affected by both a hardware structure of the PA and an operating state of the PA, the sixth compensation model determined by the first device is also related to the hardware structure of the PA. For example, the sixth compensation model matches the second PA, that is, the sixth compensation model can compensate for non-linear distortion caused by the second PA to a signal. This improves accuracy of the compensation model.

That is, the first device trains different compensation models, for example, the fourth compensation model and the sixth compensation model, for PAs of different hardware structures, so that the compensation models match the hardware structures of the PAs, to compensate for non-linear distortion caused to signals by the PAs of the different hardware structures.

In a possible design, the fifth signal includes a signal obtained by the first PA through amplification processing using the first gain in a non-linear region.

In a possible design, the fifth signal includes a ninth reference signal and a tenth reference signal. The ninth reference signal and the tenth reference signal are adjacent in time domain and/or frequency domain. Power of the ninth reference signal is ninth power, and the first power is in a linear region of the first PA. Power of the tenth reference signal is tenth power, and the second power is in a non-linear region of the first PA.

In a possible design, that the fourth compensation model is used to compensate for non-linear distortion includes: The fourth compensation model is used to compensate for the non-linear distortion after the first PA performs the amplification processing process.

That is, the fourth compensation model may post-compensate for the non-linear distortion.

In a possible design, that the fourth compensation model is used to compensate for non-linear distortion includes: The fourth compensation model is used to compensate for the non-linear distortion before the first PA performs the amplification processing process.

That is, the fourth compensation model may pre-compensate for the non-linear distortion.

In a possible design, that the fourth compensation model is used to compensate for non-linear distortion includes: The fourth compensation model includes a phase distortion compensation model and/or an amplitude distortion compensation model, the phase distortion compensation model is used to compensate for phase distortion in the non-linear distortion, and the amplitude distortion compensation model is used to compensate for amplitude distortion in the non-linear distortion.

In a possible design, the non-linear distortion compensated for by the fourth compensation model includes phase distortion. The fourth compensation model meets:

$$f_{AM-PM}(x) = -\frac{Ax^q}{\left(1 + \left(\frac{x}{B}\right)^q\right)}$$

where $x$ represents an amplitude of an input signal of the fourth compensation model, $f_{AM-PM}(x)$ represents an output signal of the fourth compensation model, and $A$, $B$, and $q$ represent model parameters of the fourth compensation model.

In a possible design, the non-linear distortion compensated for by the fourth compensation model includes phase distortion. The fourth compensation model meets:

$$f_{AM-PM}(x) = -(p_0 + p_1 x^1 + p_2 x^2 + \cdots + p_9 x^9)$$

where $x$ represents an amplitude of an input signal of the fourth compensation model, $f_{AM-PM}(x)$ represents an output signal of the fourth compensation model, and $p_0, p_1, ...,$ and $p_9$ represent model parameters of the fourth compensation model.

In a possible design, the non-linear distortion compensated for by the fourth compensation model includes amplitude distortion. The fourth compensation model meets:

$$f_{AM-AM}(x) = \frac{x}{\left(1 - \left(\frac{Gx}{V}\right)^{2p}\right)^{\frac{1}{2p}}}$$

where $x$ represents an amplitude of an input signal of the fourth compensation model, $f_{AM-AM}(x)$ represents an output signal of the fourth compensation model, and $G$, $V$, and $p$ represent model parameters of the fourth compensation model.

In a possible design, the non-linear distortion compensated for by the fourth compensation model includes amplitude distortion. The fourth compensation model meets:

$$f_{AM-AM}(x) = (a_0 + a_1 x^1 + a_2 x^2 + \cdots + a_9 x^9)$$

where $x$ represents an amplitude of an input signal of the fourth compensation model, $f_{AM-AM}(x)$ represents an output signal of the fourth compensation model, and $a_0, a_1, ...,$ and $a_9$ represent model parameters of the fourth compensation model.

In a possible design, the fifth signal is a signal below 6 GHz, or the fifth signal is a signal above 6 GHz.

According to a fourth aspect, a communication method is provided. The method may be performed by a first device, or may be performed by a module (for example, a processor, a chip, or a chip system) used in the first device. The following uses an example in which the first device performs the method for description. The method includes: The first device sends an eighth signal. The eighth signal is a signal obtained by a first power amplifier PA through amplification processing. The first device receives eighth information. The eighth information indicates a difference between the eighth signal and a fourth ideal signal. The first device determines a detection result of a fourth compensation model based on the difference between the eighth signal and the fourth ideal signal. The fourth compensation model is used to compensate for non-linear distortion, the non-linear distortion includes non-linear distortion caused to a signal by the first PA in a process of performing amplification processing, and the detection result of the fourth compensation model indicates whether the fourth compensation model runs normally.

That is, in a process of applying the fourth compensation model, after sending the eighth signal, the first device can receive the eighth information, and then determine, based on the difference indicated by the eighth information, whether the fourth compensation model runs normally, thereby achieving an effect of monitoring a running status of the compensation model. For example, if the fourth compensation model runs abnormally, a communication system may perform processing in time. This helps to improve performance of the communication system.

In a possible design, after the first device determines the detection result of the fourth compensation model based on the difference between the eighth signal and the fourth ideal signal, the method further includes: The first device sends the detection result of the fourth compensation model.

That is, the first device feeds back the detection result of the fourth compensation model, so that a receive-end device of the detection result learns of the running status of the fourth compensation model, thereby achieving an effect of monitoring the running status of the compensation model.

According to a fifth aspect, a communication method is provided. The method may be performed by a second device, or may be performed by a module (for example, a processor, a chip, or a chip system) used in the second device. The following uses an example in which the second device performs the method for description. The method includes: The second device determines a first signal and first information. The first signal is a signal obtained by a first power amplifier PA through amplification processing using a first gain, and the first information indicates the first gain. The second device sends the first signal and the first gain.

In a possible design, the first signal includes a signal obtained by the first PA through amplification processing using the first gain in a non-linear region.

In a possible design, the first signal includes a first reference signal and a second reference signal. The first reference signal and the second reference signal are adjacent in time domain and/or frequency domain. Power of the first reference signal is first power, and the first power is in a linear region of the first PA. Power of the second reference signal is second power, and the second power is in a non-linear region of the first PA.

In a possible design, the first gain is associated with a first operating state of the first PA, and the first operating state is an operating state when the first PA performs amplification processing on the first signal by using the first gain.

In a possible design, the first signal is a signal obtained by the first PA in the first operating state through amplification processing using the first gain.

In a possible design, the first operating state includes at least one of the following: an operating frequency of the first PA, an operating bandwidth of the first PA, a temperature of the first PA, output power of the first PA, or a radio access technology RAT used by the first PA.

In a possible design, the method further includes: The second device determines a second signal and second information. The second signal is a signal obtained by the first PA in a second operating state through amplification processing using a second gain, and the second information indicates the second gain. The second device sends the second signal and the second gain.

In a possible design, the method further includes: The second device determines a third signal and third information. The third signal is a signal obtained by a second PA through amplification processing using a third gain, the first PA and the second PA have different hardware structures, and the third information indicates the third gain. The second device sends the third signal and the third gain.

In a possible design, after the second device sends the first signal and the first gain, the method further includes: The second device receives a first parameter. The first parameter indicates a difference between the first signal and an ideal signal.

For technical effects achieved in any design manner in the fifth aspect, refer to the technical effects achieved in different design manners in the first aspect. Details are not described herein again.

According to a sixth aspect, a communication method is provided. The method may be performed by a third device, or may be performed by a module (for example, a processor, a chip, or a chip system) used in the third device. The following uses an example in which the third device performs the method for description. The method includes: The third device determines a fourth signal and fourth information. The fourth signal is a signal obtained by a first power amplifier PA through amplification processing using a first gain, and the fourth information indicates the first gain. The third device sends the fourth signal and the fourth information.

In a possible design, after the third device sends the fourth signal and the fourth information, the method further includes: The third device receives a second parameter. The second parameter indicates a difference between the fourth signal and an ideal signal.

In a possible design, after the third device sends the fourth signal and the fourth information, the method further includes: The third device receives a detection result of a first compensation model. The first compensation model is used to compensate for non-linear distortion, the non-linear distortion includes non-linear distortion caused to a signal by the first PA in a process of performing amplification processing by using the first gain, and the detection result of the first compensation model indicates whether the first compensation model runs normally.

For technical effects achieved in any design manner in the sixth aspect, refer to the technical effects achieved in different design manners in the second aspect. Details are not described herein again.

According to a seventh aspect, a communication method is provided. The method may be performed by a second device, or may be performed by a module (for example, a processor, a chip, or a chip system) used in the second device. The following uses an example in which the second device performs the method for description. The method includes: The second device receives a fifth signal. The fifth signal is a signal obtained by a first power amplifier PA through amplification processing. The second device sends fifth information. The fifth information indicates a difference between the fifth signal and a first ideal signal.

In a possible design, the fifth information includes a first error vector magnitude EVM, and the first EVM is used to represent the difference between the fifth signal and the first ideal signal.

In a possible design, the fifth information is associated with a first operating state of the first PA, and the first operating state is an operating state when the first PA performs amplification processing on the fifth signal.

In a possible design, the fifth signal is non-linear distortion caused to a signal by the first PA in the first operating state in a process of performing amplification processing.

In a possible design, the first operating state includes at least one of the following: an operating frequency of the first PA, an operating bandwidth of the first PA, a temperature of the first PA, output power of the first PA, or a radio access technology RAT used by the first PA.

In a possible design, the method further includes: The second device receives a sixth signal. The sixth signal is a signal obtained by the first PA in a second operating state through amplification processing. The second device sends sixth information.

In a possible design, the method further includes: The second device receives a seventh signal. The seventh signal is a signal obtained by a second PA through amplification processing, and the first PA and the second PA have different hardware structures. The second device sends seventh information. The seventh information indicates a difference between the seventh signal and a third ideal signal.

In a possible design, the fifth signal includes a signal obtained by the first PA through amplification processing using the first gain in a non-linear region.

In a possible design, the fifth signal includes a ninth reference signal and a tenth reference signal. The ninth reference signal and the tenth reference signal are adjacent in time domain and/or frequency domain. Power of the ninth reference signal is ninth power, and the first power is in a linear region of the first PA. Power of the tenth reference signal is tenth power, and the second power is in a non-linear region of the first PA.

For technical effects achieved in any design manner in the seventh aspect, refer to the technical effects achieved in different design manners in the third aspect. Details are not described herein again.

According to an eighth aspect, a communication method is provided. The method may be performed by a third device, or may be performed by a module (for example, a processor, a chip, or a chip system) used in the third device. The following uses an example in which the third device performs the method for description. The method includes: The third device receives an eighth signal. The eighth signal is a signal obtained by a first power amplifier PA through amplification processing. The third device sends eighth information. The eighth information indicates a difference between the eighth signal and a fourth ideal signal.

In a possible design, after the third device sends the eighth information, the method further includes: The third device receives a detection result of a fourth compensation model. The fourth compensation model is used to compensate for non-linear distortion, the non-linear distortion includes non-linear distortion caused to a signal by the first PA in a process of performing amplification processing, and the detection result of the fourth compensation model indicates whether the fourth compensation model runs normally.

For technical effects achieved in any design manner in the eighth aspect, refer to the technical effects achieved in different design manners in the fourth aspect. Details are not described herein again.

According to a ninth aspect, a communication method is provided. The method may be performed by a fourth device, or may be performed by a module (for example, a processor, a chip, or a chip system) used in the fourth device. The following uses an example in which the fourth device performs the method for description. The method includes: The fourth device obtains ninth information. The ninth information is associated with a ninth signal, and the ninth signal is a signal obtained by a first power amplifier PA through amplification processing. The fourth device selects a seventh compensation model from at least two compensation models based on the ninth information. The seventh compensation model is used to compensate for non-linear distortion of the ninth signal, and the non-linear distortion includes non-linear distortion caused to the ninth signal by the first PA in a process of performing amplification processing.

That is, even if the fourth device has at least two compensation models, after obtaining the ninth information, the fourth device can select one compensation model, for example, the seventh compensation model, from the at least two compensation models based on the ninth information, to compensate for the non-linear distortion of the ninth signal. Because the ninth information is associated with the ninth signal, the seventh compensation model determined based on the ninth information can accurately compensate for the non-linear distortion of the ninth signal, to avoid a problem that the fourth device cannot learn of which compensation model is used to compensate for the non-linear distortion of the signal.

In a possible design, that the ninth information is associated with the ninth signal includes: The ninth information indicates a fourth gain, and the fourth gain is a gain used when the first PA performs amplification processing on the ninth signal.

The at least two compensation models include the seventh compensation model and an eighth compensation model, the seventh compensation model is associated with the fourth gain, and the eighth compensation model is associated with a fifth gain.

In this application, that the seventh compensation model is associated with the fourth gain may be understood as that non-linear distortion compensated for by the seventh compensation model includes non-linear distortion caused to a signal by the first PA in a process of performing amplification processing by using the fourth gain.

In this application, that the eighth compensation model is associated with the fifth gain may be understood as that non-linear distortion compensated for by the eighth compensation model includes non-linear distortion caused to a signal by the first PA in a process of performing amplification processing by using the fifth gain.

In a possible design, that the ninth information is associated with the ninth signal includes: The ninth information indicates a second error vector magnitude EVM, and the second EVM is used to represent a difference between the ninth signal and a fifth ideal signal.

The at least two compensation models include the seventh compensation model and a ninth compensation model, the seventh compensation model is associated with the second EVM, and the ninth compensation model is associated with a third EVM.

In this application, that the seventh compensation model is associated with the second EVM may be understood as that the seventh compensation model is determined based on the second EVM.

In this application, that the ninth compensation model is associated with the third EVM may be understood as that the ninth compensation model is determined based on the third EVM.

In a possible design, that the fourth device obtains the ninth information includes: determining the ninth information, or receiving the ninth information.

In a possible design, after the fourth device selects the seventh compensation model from the at least two compensation models based on the ninth information, the method further includes: The fourth device performs compensation processing by using the seventh compensation model, to obtain the ninth signal. The fourth device sends the ninth signal.

That is, the seventh compensation model is a pre-compensation model, and is used to pre-compensate for the non-linear distortion of the ninth signal.

In a possible design, after the fourth device selects the seventh compensation model from the at least two compensation models based on the ninth information, the method further includes: The fourth device receives the ninth signal. The fourth device compensates for the non-linear distortion of the ninth signal by using the seventh compensation model.

That is, the seventh compensation model is a post-compensation model, and is used to post-compensate for the non-linear distortion of the ninth signal.

According to a tenth aspect, a communication apparatus is provided, to implement the foregoing methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations thereof. The transceiver module may include a receiving module and a sending module that are respectively configured to implement a receiving function and a sending function in any one of the foregoing aspects and the possible implementations thereof.

In some possible designs, the transceiver module may include a transceiver circuit, a transceiver machine, a transceiver, or a communication interface.

According to an eleventh aspect, a communication apparatus is provided, including a processor and a memory. The memory is configured to store computer instructions. When the processor executes the instructions, the communication apparatus is enabled to perform the method according to any one of the foregoing aspects.

According to a twelfth aspect, a communication apparatus is provided, including a processor and a communication interface. The communication interface is configured to communicate with a module outside the communication apparatus. The processor is configured to execute a computer program or instructions, to enable the communication apparatus to perform the method according to any one of the foregoing aspects.

According to a thirteenth aspect, a communication apparatus is provided, including at least one processor. The processor is configured to execute a computer program or instructions stored in a memory, to enable the communication apparatus to perform the method according to any one of the foregoing aspects. The memory may be coupled to the processor, or may be independent of the processor.

According to a fourteenth aspect, a computer-readable storage medium is provided. The computer-readable storage medium stores a computer program or instructions. When the computer program or the instructions are run on a communication apparatus, the communication apparatus is enabled to perform the method according to any one of the foregoing aspects.

According to a fifteenth aspect, a computer program product including instructions is provided. When the instructions are run on a communication apparatus, the communication apparatus is enabled to perform the method according to any one of the foregoing aspects.

According to a sixteenth aspect, a communication apparatus (for example, the communication apparatus may be a chip or a chip system) is provided. The communication apparatus includes a processor, configured to implement a function in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete device.

The communication apparatus provided in any one of the tenth aspect to the sixteenth aspect may be the first device in the first aspect to the fourth aspect, or an apparatus included in the first device, for example, a chip or a chip system; or the communication apparatus may be the second device in the fifth aspect or the seventh aspect, or an apparatus included in the second device, for example, a chip or a chip system; or the communication apparatus may be the third device in the sixth aspect or the eighth aspect, or an apparatus included in the third device, for example, a chip or a chip or a chip system; or the communication apparatus may be the fourth device in the ninth aspect, or an apparatus included in the fourth device, for example, a chip or a chip system.

It may be understood that, when the communication apparatus provided in any one of the tenth aspect to the sixteenth aspect is a chip, a sending action/function of the communication apparatus may be understood as outputting information, and a receiving action/function of the communication apparatus may be understood as inputting information.

For technical effects brought by any one of the designs of the tenth aspect to the sixteenth aspect, refer to the technical effects brought by different designs of the first aspect to the ninth aspect. Details are not described herein again.

According to a seventeenth aspect, a communication system is provided. The communication system includes a first device and a second device. The first device is configured to implement the method according to the first aspect, and the second device is configured to implement the method according to the fifth aspect. Alternatively, the first device is configured to implement the method according to the third aspect, and the second device is configured to implement the method according to the seventh aspect.

Alternatively, the communication system includes a first device and a third device. The first device is configured to implement the method according to the second aspect, and the third device is configured to implement the method according to the sixth aspect. Alternatively, the first device is configured to implement the method according to the fourth aspect, and the third device is configured to implement the method according to the eighth aspect.

## BRIEF DESCRIPTION OF DRAWINGS

FIG. 1 is a diagram of an architecture of a communication system to which an embodiment of this application is applied;

FIG. 2 is a principle diagram of non-linear distortion according to an embodiment of this application;

FIG. 3 is another principle diagram of non-linear distortion according to an embodiment of this application;

FIG. 4 is a principle diagram of compensating for non-linear distortion according to an embodiment of this application;

FIG. 5 is another principle diagram of compensating for non-linear distortion according to an embodiment of this application;

FIG. 6 is a schematic flowchart of a communication method according to an embodiment of this application;

FIG. 7 is a schematic flowchart of another communication method according to an embodiment of this application;

FIG. 8 is a schematic flowchart of still another communication method according to an embodiment of this application;

FIG. 9 is a schematic flowchart of still another communication method according to an embodiment of this application;

FIG. 10 is a schematic flowchart of still another communication method according to an embodiment of this application;

FIG. 11 is a schematic flowchart of still another communication method according to an embodiment of this application;

FIG. 12 is a schematic flowchart of still another communication method according to an embodiment of this application;

FIG. 13 is a schematic flowchart of still another communication method according to an embodiment of this application;

FIG. 14 is a schematic flowchart of still another communication method according to an embodiment of this application;

FIG. 15 is a schematic flowchart of still another communication method according to an embodiment of this application;

FIG. 16 is a schematic flowchart of still another communication method according to an embodiment of this application;

FIG. 17 is still another principle diagram of compensating for non-linear distortion according to an embodiment of this application;

FIG. 18 is still another principle diagram of compensating for non-linear distortion according to an embodiment of this application;

FIG. 19 is a diagram of a structure of a communication apparatus according to an embodiment of this application;

FIG. 20 is a diagram of a structure of another communication apparatus according to an embodiment of this application; and

FIG. 21 is a diagram of a structure of still another communication apparatus according to an embodiment of this application.

## DESCRIPTION OF EMBODIMENTS

The following describes technical solutions of this application with reference to accompanying drawings.

The technical solutions in embodiments of this application may be applied to various communication systems, for example, a universal mobile telecommunication system (universal mobile telecommunication system, UMTS), a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an internet-of-vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5th generation (5th generation, 5G) mobile communication system, for example, a new radio (new radio, NR) system, a 6th generation (6th generation, 6G) mobile communication system, and communication systems in indoor commercial scenarios. This is not specifically limited in embodiments of this application. The indoor commercial scenarios include scenarios such as screen projection from a terminal device (for example, a mobile phone) to a screen and virtual reality (virtual reality, VR) games. In addition, the terms "system" and "network" may be interchanged with each other.

Aspects, embodiments, or features are presented in this application by describing a system that may include a plurality of devices, components, modules, or the like. It should be appreciated and understood that, each system may include another device, component, module, or the like, and/or may not include all devices, components, modules, or the like discussed with reference to accompanying drawings. In addition, a combination of these solutions may be used.

In addition, in embodiments of this application, a term such as "example" or "for example" is used to represent giving an example, an illustration, or a description. Any embodiment or design scheme described as an "example" in this application should not be interpreted as being preferred or superior to another embodiment or design scheme. To be precise, the term example is intended to present a concept in a specific manner.

In embodiments of this application, "of (of)", "relevant (corresponding or relevant)", and "corresponding (corresponding)" may be used interchangeably sometimes. It should be noted that meanings expressed by the terms are consistent when differences are not emphasized.

Network architectures and service scenarios described in embodiments of this application are intended to describe the technical solutions in embodiments of this application more clearly, and do not constitute limitations on the technical solutions provided in embodiments of this application. A person of ordinary skill in the art may know that, with the evolution of the network architectures and the emergence of new service scenarios, the technical solutions provided in embodiments of this application are also applicable to similar technical problems.

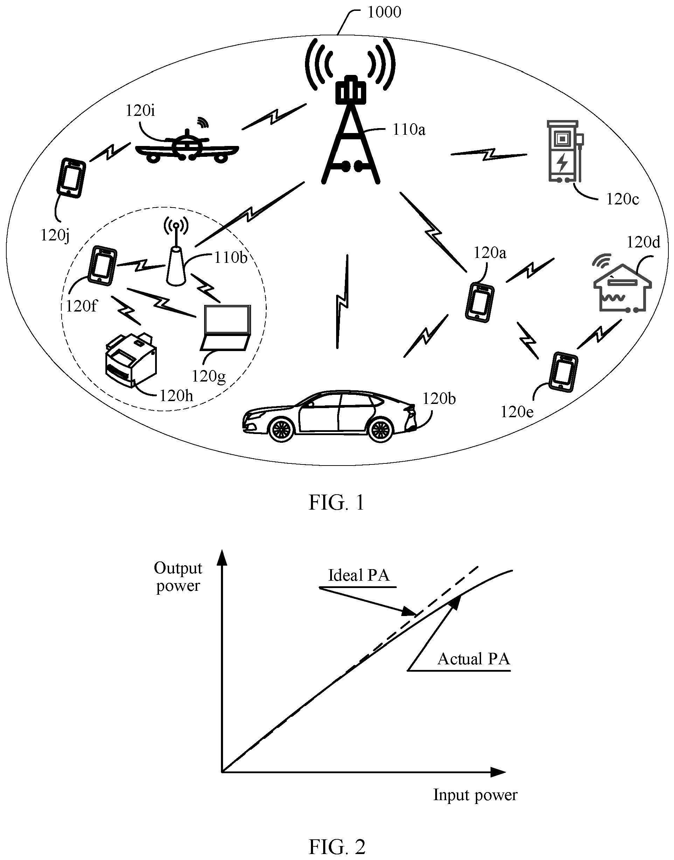

FIG. 1 is a diagram of an architecture of a communication system 1000 to which an embodiment of this application is applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, another network device may be further included in the communication system 1000. For example, the communication system 1000 may further include one or more of a core network (core network, CN) device, a wireless relay device, and a wireless backhaul device. This is not specifically limited herein.

The network device may be connected to the core network device in a wireless or wired manner. The core network device and the network device may be different independent physical devices, or functions of the core network device and logical functions of the network device may be integrated into a same physical device, or a part of functions of the core network device and a part of functions of the network device may be integrated into one physical device. This is not specifically limited in embodiments of this application.

Optionally, the network device is a network-side device having a wireless transceiver function. The network device may be an apparatus that is in a radio access network (radio access network, RAN) and that provides a wireless communication function for the terminal device, and is referred to as a RAN device. The RAN may be an access network in the 3rd generation partnership project (3rd generation partnership project, 3GPP), for example, a 4G network, a 5G network, or a future-oriented 6G network. Alternatively, the RAN may be an open radio access network (open RAN, O-RAN, or ORAN), a cloud radio access network (cloud radio access network, CRAN), or a communication network of two or more of the foregoing networks. The RAN device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, a wireless fidelity (wireless fidelity, Wi-Fi) system, or an access node in a long range radio (long range radio, LoRa) system or an internet-of-vehicles system. Alternatively, the RAN device may be a module or a unit that completes a part of functions of a base station, for example, a central unit (central unit, CU), a distributed unit (distributed unit, DU), or a radio unit (radio unit, RU). The CU herein completes functions about a radio resource control protocol and a packet data convergence protocol (packet data convergence protocol, PDCP) of the base station, and may further complete a function about a service data adaptation protocol (service data adaptation protocol, SDAP). The DU completes functions of a radio link control layer and a medium access control (medium access control, MAC) layer of the base station, and may further complete a part of or all functions of a physical layer. For specific descriptions of the foregoing protocol layers, refer to related technical specifications of 3GPP. The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH). In different systems, the CU, the DU, or the RU may have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or a CU-CP or a CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor station (for example, 110b in FIG. 1), or may be a relay node, a donor node, or the like. A specific technology and a specific device form that are used by the radio access network device are not limited in embodiments of this application. For ease of description, a network device is short for the radio access network device, and a base station is used as an example of the radio access network device.

Optionally, the terminal device accesses a core network via the network device. The terminal device includes a device that provides voice and/or data connectivity for users, specifically including a device that provides voice for users, a device that provides data connectivity for users, or a device that provides voice and data connectivity for users, for example, may include a handheld device with a wireless connection function, or a processing device connected to a wireless modem. The terminal device may communicate with the core network via the radio access network, and exchange voice or data with the RAN, or exchange voice and data with the RAN. The terminal device may include user equipment (user equipment, UE), a wireless terminal device, a mobile terminal device, a D2D terminal device, a V2X terminal device, a machine-to-machine/machine-type-communication (machine-to-machine/machine-type-communication, M2M/MTC) terminal device, an internet-of-things (internet-of-things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer having a mobile terminal device, or a portable, pocket-sized, hand-held, or computer-embedded mobile apparatus, for example, a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability, for example, includes an information sensing device such as a barcode, a radio frequency identification (radio frequency identification, RFID), a sensor, a global positioning system (global positioning system, GPS), or a laser scanner.

The terminal device described above may be considered as an in-vehicle terminal device if located in a vehicle (for example, placed in a vehicle or installed in a vehicle). The in-vehicle terminal device is also referred to as, for example, an on-board unit (on-board unit, OBU).

In embodiments of this application, the terminal device may further include a relay (relay). Alternatively, it is understood as that any device that can perform data communication with the base station may be considered as a terminal device.

In embodiments of this application, an apparatus configured to implement a function of the terminal device may be the terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal is the terminal device is used for description.

It should be understood that the network device and the terminal device may be at fixed positions, or may be movable. The network device and the terminal device may be deployed on land, including indoor, outdoor, handheld, or in-vehicle devices; or may be deployed on a water surface; or may be deployed on a plane, a balloon, and an artificial satellite in air. Application scenarios of the network device and the terminal device are not limited in embodiments of this application.

Roles of the network device and the terminal device may be relative. For example, the helicopter or uncrewed aerial vehicle 120i in FIG. 1 may be configured as a mobile base station. For the terminal device 120j that accesses the radio access network via 120i, the helicopter or uncrewed aerial vehicle 120i is a network device; while for the network device 110a, 120i is a terminal device, that is, 110a and 120i communicate with each other by using a radio air interface protocol. Certainly, 110a and 120i may alternatively communicate with each other by using an interface protocol between base stations. In this case, for 110a, 120i is also a network device. Therefore, the network device and the terminal device may be collectively referred to as a communication apparatus. 110a and 110b in FIG. 1 may be referred to as a communication apparatus having a function of a network device, and 120a to 120j in FIG. 1 may be referred to as a communication apparatus having a function of a terminal device.

Communication between a network device and a terminal device, between network devices, and between terminal devices may be performed by using a licensed spectrum, an unlicensed spectrum, or both (in other words, this application may be applied to both communication on a licensed spectrum and communication on an unlicensed spectrum), which may be performed by using a spectrum below 6 gigahertz (gigahertz, GHz), a spectrum above 6 GHz, or both. A spectrum resource used for wireless communication is not limited in embodiments of this application.

In this application, the function of the network device may alternatively be performed by a module (for example, a chip) in the network device, or may be performed by a control subsystem including the function of the network device. The control subsystem including the function of the network device herein may be a control center in the foregoing application scenarios such as a smart grid, industrial control, smart transportation, and a smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, and the downlink information is carried on a downlink channel. The terminal device sends an uplink signal or uplink information to the network device, and the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When communicating with the serving cell, the terminal device may be further interfered with by a signal from a neighboring cell.

In this application, a terminal device sends a sidelink signal or sidelink information to another terminal device, and the sidelink information is carried on a sidelink channel.

It should be noted that the solutions in embodiments of this application may be further applied to another communication system, and a corresponding name may be replaced with a name of a corresponding function in the another communication system.

For ease of understanding embodiments of this application, the following first briefly describes terms in embodiments of this application. It should be understood that these descriptions are merely provided for ease of understanding embodiments of this application, and shall not constitute any limitation on this application.

1. Artificial intelligence (artificial intelligence, AI) technology

The artificial intelligence (artificial intelligence, AI) technology is introduced into a wireless communication system to assist with running efficiency of a terminal device and/or a network device and implement RAN intelligence.

2. Non-linear distortion

Generally, a radio signal is amplified by a power amplifier (power amplifier, PA) before transmitted to achieve long-distance transmission. However, due to a non-linear characteristic of the PA, non-linear distortion is generated after the radio signal passes through the PA, and affects demodulation at a receive end of the radio signal.

Regardless of whether the PA operates in a linear region or a non-linear region, a mapping relationship between an output signal and an input signal includes a non-linear distortion component. When the PA operates in the linear region, the non-linear distortion component is weak. When the PA operates in the non-linear region, the non-linear distortion component is strong.

As shown in FIG. 2, larger input power (or output power) of the PA indicates more obvious non-linear distortion caused by the PA to a signal, as shown by a larger deviation degree between a solid line and a dashed line in FIG. 2. The solid line is used to represent a characteristic presented when the PA is actually running, and the dashed line is used to represent a characteristic presented by an ideal PA.

In this application, the non-linear distortion includes amplitude distortion and phase distortion. In some examples, precision of a low-cost PA is low, and non-linear distortion caused by such a component to a signal is obvious, affecting communication performance. Alternatively, in some other examples, when a communication system demodulates a signal through quadrature amplitude modulation (quadrature amplitude modulation, QAM) with a high modulation order, non-linear distortion of the signal greatly affects communication performance. In this case, the non-linear distortion caused by the PA to the signal cannot be ignored. In other words, impact of non-linear distortion caused by the PA to a signal in a high-order QAM communication system cannot be ignored.

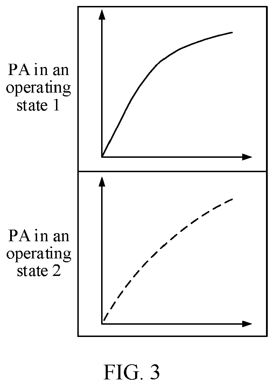

It should be noted that the non-linear distortion of the PA is affected by an operating state of the PA. Specifically, degrees of non-linear distortion of the PA in different operating states are different, as shown in FIG. 3. In FIG. 3, non-linear distortion presented when the PA is in an operating state 1 is different from non-linear distortion presented when the PA is in an operating state 2, as shown by different bending degrees of a solid curve and a dashed curve in FIG. 3. In this application, the operating state of the PA includes at least one of the following: an operating frequency of the PA, an operating bandwidth of the PA, a temperature of the PA, output power of the PA, a radio access technology (radio access technology, RAT) used by the PA, or the like.

It may be understood as that an impact factor of the non-linear distortion of the PA includes an operating state of the PA. The operating state of the PA includes at least one of the following: an operating frequency of the PA, an operating bandwidth of the PA, a temperature of the PA, output power of the PA, a RAT used by the PA, or the like.

3. Power back-off

To prevent a signal from entering the non-linear region of the PA, a communication device may reduce power of the signal, for example, back off input power of the signal to the linear region of the PA, to ensure linear amplification of the signal as much as possible.

However, in the power back-off manner, a difference between input power and output power of the PA is small, which means that efficiency of the PA is low.

4. Digital pre-distortion (digital pre-distortion, DPD)

The digital pre-distortion means performing digital pre-distortion processing on a signal before the signal enters a PA, to compensate for non-linear distortion generated by the PA to the signal. The digital pre-distortion and the non-linear distortion generated by the PA have opposite non-linear characteristics. In this way, the signal is still linear after processed by the DPD and the PA.

In this application, the digital pre-distortion may be understood as pre-compensating for the non-linear distortion of the signal.

Specifically, an operating principle of the DPD is as follows:
When a communication device does not use the DPD, an output signal of the PA meets the following formula:

$$y(t)=f(x(t)) \qquad \text{Formula (1)}$$

where y(t) represents the output signal of the PA when the communication device does not use the DPD, x(t) represents an input signal of the PA, and f(.) represents an operational function of the PA.

When the communication device uses the DPD, an output signal of the PA meets the following formula:

$$z(t)=f(g(x(t)))=kx(t) \qquad \text{Formula (2)}$$

where z(t) represents the output signal of the PA when the communication device uses the DPD, x(t) represents an input signal of the PA, f(.) represents an operational function of the PA, g(.) represents an operational function corresponding to the DPD, and k represents a constant.

It can be learned from above that the function g(.) and the function f(.) have completely opposite non-linear characteristics, the function g(.) is determined based on the function f(.), and the function f(.) is very important for searching for the function g(.). For example, when k=1, it may be understood as that the function g(.) is an inverse function of the function f(.).

In some embodiments, the function f(.) may be an approximate mathematical model of the PA, for example, a memory polynomial (memory polynomial, MP) model or a generalized memory polynomial (generalized Memory polynomial, GMP) model. A model parameter of the MP model or the GMP model may be obtained by using a least square method.

In addition, in this application, a DPD model may have another name, for example, a deep neural network digital pre-distortion (deep neural network digital pre-distortion, DNN DPD) model. The DPD model is used as an example for description in this application, and should not be construed as a limitation on embodiments of this application.

5. Digital post-distortion (digital post-distortion, DPoD)

The digital post-distortion means performing digital post-distortion on a signal after a PA (for example, a low noise amplifier (low noise amplifier, LNA)) outputs the signal, to compensate for non-linear distortion generated by the PA.

In addition, in this application, a DPoD model may have another name, for example, a deep neural network digital post-distortion (deep neural network digital post-distortion, DNN DPoD) model. The DPoD model is used as an example for description in this application, and should not be construed as a limitation on embodiments of this application.

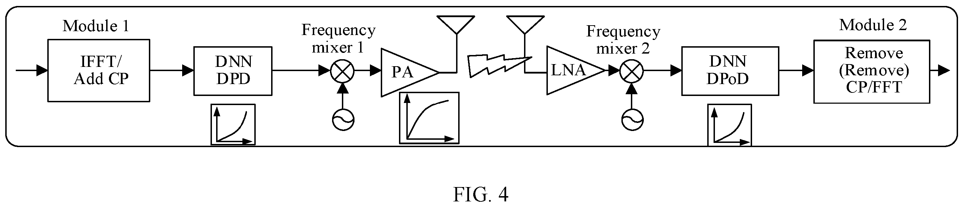

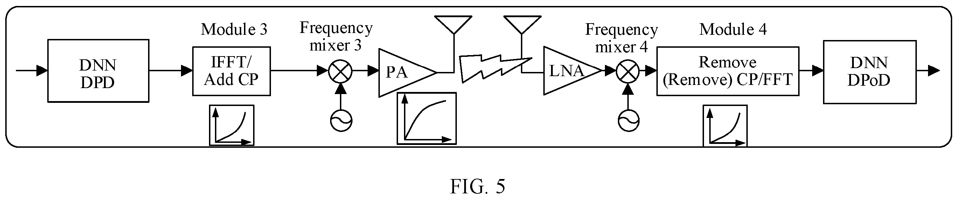

In this application, models used to compensate for non-linear distortion (that is, non-linear distortion caused to signals by PAs in amplification processes) may be collectively referred to as a compensation model. A model for compensating a signal before the signal enters a PA may be referred to as a pre-compensation model. The pre-compensation model may be a DPD model, as shown in FIG. 4 or FIG. 5. A model for compensating a signal after a PA outputs the signal may be referred to as a post-compensation model. The post-compensation model may be a DPoD model, as shown in FIG. 4 or FIG. 5.

In this application, the compensation model may compensate for non-linear distortion of a signal in time domain, as shown in FIG. 4. Alternatively, the compensation model may compensate for non-linear distortion of the signal in frequency domain, as shown in FIG. 5.

It should be noted that, in this application, FIG. 4 is described as follows:

As shown in FIG. 4, a module 1, a DNN DPD model, a frequency mixer 1, a PA, antennas, an LNA, a frequency mixer 2, a DNN DPoD model, and a module 2 are included. The module 1 is configured to perform inverse fast Fourier transform (inverse fast fourier transformation, IFFT) and add cyclic prefix (add cyclic prefix, Add CP) processing. The module 2 is configured to perform fast Fourier transform (fourier transformation, FFT) and remove cyclic prefix (remove cyclic prefix, Remove CP) processing.

In this application, the IFFT processing is used to transform a frequency domain signal into a time domain signal. The FFT processing is used to transform a time domain signal into a frequency domain signal. For Add CP and Remove CP, refer to related technical specifications of 3GPP. Details are not described.

In FIG. 4, a processing process performed at a signal transmitting end is as follows:

The module 1 performs IFFT and Add CP processing on a baseband signal X1 to obtain a baseband signal X2. The baseband signal X2 is a time domain signal.

The DNN DPD model compensates the baseband signal X2 to obtain a compensated signal, for example, a baseband signal X3.

The frequency mixer 1 processes the baseband signal X3, for example, adjusts a center frequency of the baseband signal X3, to obtain a radio frequency signal Z1.

The PA amplifies the radio frequency signal Z1 to obtain an amplified signal, for example, a radio frequency signal Z2.

An antenna sends the radio frequency signal Z2.

In FIG. 4, a processing process performed at a signal receiving end is as follows:

An antenna receives the radio frequency signal Z2.

The LNA amplifies the radio frequency signal Z2 to obtain an amplified signal, for example, a radio frequency signal Z3.

The frequency mixer 2 processes the radio frequency signal Z3, for example, adjusts a center frequency of the radio frequency signal Z3, to obtain a baseband signal X4.

The DNN DPoD model compensates the baseband signal X4 to obtain a compensated signal, for example, a baseband signal X5. The baseband signal X4 is a time domain signal.

The mode 2 performs FFT and Remove CP processing on the baseband signal X5 to obtain a baseband signal X6.

It can be learned from above that, at the signal transmitting end, the module 1 first performs IFFT processing, and then the DNN DPD model performs compensation processing. In this case, because the signal processed by the DNN DPD model is a time domain signal, the compensation processing performed by the DNN DPD model is performed in time domain.

Similarly, at the signal receiving end, the DNN DPoD model first performs compensation processing, and then the module 2 performs FFT processing. In this case, because the signal processed by the DNN DPoD model is a time domain signal, the compensation processing performed by the DNN DPoD model is performed in time domain.

In addition, at the signal transmitting end, the DNN DPD model first performs compensation processing, and then the PA performs amplification processing. In this case, because the compensation processing is performed before the amplification processing, the compensation processing performed by the DNN DPD model is pre-compensation processing.

Similarly, at the signal receiving end, the LNA first performs amplification processing, and then the DNN DPoD model performs compensation processing. In this case, because the compensation processing is performed after the amplification processing, the compensation processing performed by the DNN DPoD model is post-compensation processing.

It should be noted that, in this application, FIG. 5 is described as follows:

As shown in FIG. 5, a DNN DPD model, a module 3, a frequency mixer 3, a PA, antennas, an LNA, a frequency mixer 4, a module 4, and a DNN DPoD model are included. The module 3 is configured to perform IFFT and Add CP processing. The module 4 is configured to perform FFT and Remove CP processing.

In FIG. 5, a processing process performed at a signal transmitting end is as follows:

The DNN DPD model compensates a baseband signal Y1 to obtain a compensated signal, for example, a baseband signal Y2. The baseband signal Y1 is a frequency domain signal.

The module 3 performs IFFT and Add CP processing on the baseband signal Y2 to obtain a baseband signal Y3.

The frequency mixer 3 processes the baseband signal Y3, for example, adjusts a center frequency of the baseband signal Y3, to obtain a radio frequency signal Z4.

The PA amplifies the radio frequency signal Z4 to obtain an amplified signal, for example, a radio frequency signal Z5.

An antenna sends the radio frequency signal Z5.

In FIG. 5, a processing process performed at a signal receiving end is as follows:

An antenna receives the radio frequency signal Z5.

The LNA amplifies the radio frequency signal Z5 to obtain an amplified signal, for example, a radio frequency signal Z6.

The frequency mixer 4 processes the radio frequency signal Z6, for example, adjusts a center frequency of the radio frequency signal Z6, to obtain a baseband signal Y4.

The module 4 performs FFT and Remove CP processing on the baseband signal Y4 to obtain a baseband signal Y5. The baseband signal Y5 is a frequency domain signal.

The DNN DPoD model compensates the baseband signal Y5 to obtain a compensated signal, for example, a baseband signal Y6.

It can be learned from above that, at the signal transmitting end, the DNN DPD model first performs compensation processing, and then the module 3 performs IFFT processing. In this case, because the signal processed by the DNN DPD model is a frequency domain signal, the compensation processing performed by the DNN DPD model is performed in frequency domain.

Similarly, at the signal receiving end, the module 4 first performs FFT processing, and then the DNN DPoD model performs compensation processing. In this case, because the signal processed by the DNN DPoD model is a frequency domain signal, the compensation processing performed by the DNN DPoD model is performed in frequency domain.

In addition, at the signal transmitting end, the DNN DPD model first performs compensation processing, and then the PA performs amplification processing. In this case, because the compensation processing is performed before the amplification processing, the compensation processing performed by the DNN DPD model is pre-compensation processing.

Similarly, at the signal receiving end, the LNA first performs amplification processing, and then the DNN DPoD model performs compensation processing. In this case, because the compensation processing is performed after the amplification processing, the compensation processing performed by the DNN DPoD model is post-compensation processing.

It can be learned from FIG. 4 and FIG. 5 that both FIG. 4 and FIG. 5 show pre-compensation and post-compensation. The pre-compensation and the post-compensation in FIG. 4 are performed in time domain, while the pre-compensation and the post-compensation in FIG. 5 are performed in frequency domain.

It should be noted that, in this application, the DNN DPD model may alternatively be described as, for example, an AI DPD model or a DPD model. Similarly, the DNN DPoD model may alternatively be described as, for example, an AI DPoD model or a DPoD model.

In a related technology, a compensation model cannot accurately compensate for non-linear distortion caused by a PA to a signal. Specifically, for example, the compensation model is a DPD model. A conventional DPD model is established depending on approximate mathematical modeling on the PA, but the approximate mathematical modeling cannot be used to accurately describe non-linear distortion of the PA in different operating states. In this case, the conventional DPD model cannot match the PA in actual operation, and therefore cannot accurately compensate for non-linear distortion caused by the PA to a signal.

Embodiment 1

In view of this, this embodiment of this application provides a communication method. The method may be applied to the communication system shown in FIG. 1. In the communication method provided in this embodiment of this application, a first device receives a first signal and first information. The first signal is a signal obtained by a first PA through amplification processing using a first gain, and the first information indicates the first gain. The first device determines a first compensation model based on the first signal and the first gain. The first compensation model is used to compensate for non-linear distortion. The non-linear distortion compensated for by the first compensation model includes non-linear distortion caused to a signal by the first PA in a process of performing amplification processing by using the first gain.

That is, after receiving the first signal and the first information, the first device determines, based on the first signal and the first information, the first compensation model used to compensate for non-linear distortion. Because the first signal is a signal obtained by the first PA through amplification processing using the first gain, the first signal can present non-linear distortion caused to a signal by the first PA in a specific operating state. In addition, the first gain indicated by the first information can enable the first device to determine an ideal signal obtained through ideal linear amplification, that is, a signal without non-linear distortion generated. Correspondingly, the first device can learn of a difference between the actually received first signal and the ideal signal, and then determine the first compensation model based on the difference between the first signal and the ideal signal. In this way, the first compensation model can match the first PA in actual operation, to accurately compensate for non-linear distortion caused by the first PA to a signal, without approximate mathematical modeling on the first PA. This helps to enable high QAM and improve transmission efficiency of the communication system.

It should be understood that names of messages between devices, names of parameters in the messages, or the like in the following embodiments of this application are merely examples, and there may be other names during specific implementation. This is not specifically limited in embodiments of this application. This is noted herein once for all, and is not repeated below.

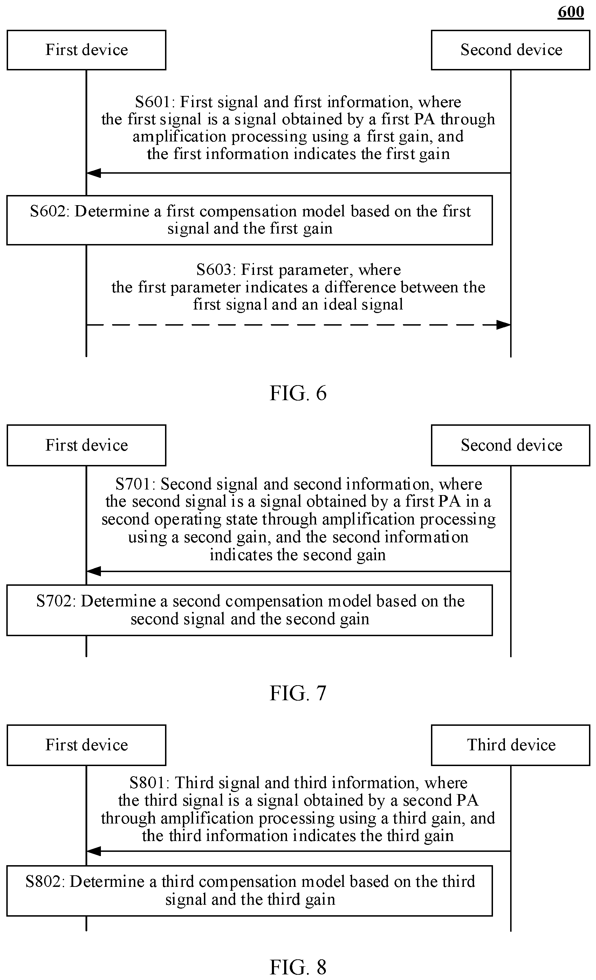

The following describes, in detail with reference to FIG. 6, the communication method proposed in this embodiment of this application. As shown in FIG. 6, the communication method 600 proposed in this embodiment of this application includes the following operations.

S601: A second device sends a first signal and first information to a first device. Correspondingly, the first device receives the first signal and the first information from the second device.

For example, the first device is described as follows:

The first device may be a terminal device in the communication system shown in FIG. 1, or may be a component, for example, a processor, a chip, or a chip system, used in the terminal device, or may be a logical module or software that can implement all or a part of functions of the terminal device.

Alternatively, the first device may be a network device in the communication system shown in FIG. 1, or may be a component, for example, a processor, a chip, or a chip system, used in the network device, or may be a logical module or software that can implement all or a part of functions of the network device.

For example, the second device is described as follows:

When the first device is a terminal device, the second device may be a terminal device (or a component, for example, a processor, a chip, or a chip system, used in the terminal device, or a logical module or software that can implement all or a part of functions of the terminal device) or a network device (or a component, for example, a processor, a chip, or a chip system, used in the network device, or a logical module or software that can implement all or a part of functions of the network device) in the communication system shown in FIG. 1.

When the first device is a network device, the second device may be a terminal device in the communication system shown in FIG. 1 (or a component, for example, a processor, a chip, or a chip system, used in the terminal device, or a logical module or software that can implement all or a part of functions of the terminal device).

It should be noted that in this application, the second device may be a device different from the first device. Alternatively, the second device may be a device that is the same as the first device. This is not limited in this application.

The first signal is described as follows:

The first signal is a signal obtained by a first PA through amplification processing using a first gain.

For example, the first signal may be a data signal, or may be a reference signal. This is not limited in this application. The first PA may be a component in the second device.

Optionally, the first signal includes a signal obtained by the first PA through amplification processing using the first gain in a non-linear region.

That is, a part of or all signals of the first signal are signals obtained through amplification processing in the non-linear region of the first PA. Non-linear distortion of the signal obtained through amplification processing in the non-linear region of the first PA is obvious. In this way, the first device may determine a first compensation model based on the signal with obvious non-linear distortion. This helps to improve accuracy of the compensation model.

Optionally, the first signal includes a first reference signal and a second reference signal. The first reference signal and the second reference signal are adjacent in time domain and/or frequency domain. Power of the first reference signal is first power, and the first power is in a linear region of the first PA. Power of the second reference signal is second power, and the second power is in a non-linear region of the first PA.

That is, the first reference signal and the second reference signal are adjacent in time domain and/or frequency domain, so that radio channel characteristics in transmitting the first reference signal and the second reference signal are the same or similar. In this way, the first device may perform channel estimation based on the first reference signal, perform channel estimation based on the second reference signal, and determine a first compensation model based on channel estimation results of the second reference signal and the first reference signal. This helps to improve accuracy of the compensation model.

It should be noted that, when the first signal includes the first reference signal and the second reference signal, it may be understood as that the first signal is a signal transmitted between the first device and the second device through a radio channel. In a transmission process, a radio channel characteristic affects the first signal to some extent. In this way, the first signal includes not only non-linear distortion caused to the first signal by the first PA in a process of performing amplification processing by using the first gain, but also impact caused by the radio channel characteristic to the first signal. The radio channel characteristic may be obtained through channel estimation.

Optionally, the first gain is associated with a first operating state of the first PA. The first operating state is an operating state when the first PA performs amplification processing on the first signal by using the first gain.

For example, the first operating state of the first PA includes at least one of the following: an operating frequency of the first PA is an operating frequency 1, an operating bandwidth of the first PA is an operating bandwidth 1, a temperature of the first PA is a temperature 1, output power of the first PA is power 1, or a RAT used by the first PA is a communication standard 1, for example, a 3G communication standard.

In this application, because non-linear distortion of the first PA is affected by an operating state of the first PA, the first gain is associated with the first operating state of the first PA, so that the first compensation model determined by the first device is also related to the operating state of the first PA. For example, the first compensation model matches the first PA in the first operating state, so that the first compensation model can compensate for non-linear distortion caused to a signal by the first PA in the first operating state.

Optionally, the first signal may be a signal below 6 GHz, or the first signal may be a signal above 6 GHz.

The first information is described as follows:

The first information indicates the first gain. For example, the first information includes the first gain. The first gain may be denoted as $G_1$.

In addition, in a possible alternative manner, the first information indicates a range to which the first gain belongs. For example, a range 1 is 10 to 20, which may be understood as that a gain range represented by the range 1 is 10 to 20. A range 2 is 20 to 30, which may be understood as that a gain range represented by the range 2 is 20 to 30. When the first gain falls within the range 1, the first information indicates the range 1.

Optionally, the first information is carried in one of the following:

For example, the first information is carried on a data channel. For example, the first information is carried in a header of a data packet.

For another example, the first information is carried in a signaling message. For example, the first information is carried in radio resource control (radio resource control, RRC) signaling, downlink control information (downlink control information, DCI), uplink control information (uplink control information, UCI), or sidelink control information (sidelink control information, SCI).

For the first device, after receiving the first signal and the first information, the first device performs S602:

S602: The first device determines the first compensation model based on the first signal and the first gain.

The first compensation model is described as follows:

The first compensation model is used to compensate for non-linear distortion. The non-linear distortion compensated for by the first compensation model includes non-linear distortion caused to a signal by the first PA in a process of performing amplification processing by using the first gain.

Optionally, the first compensation model includes a pre-compensation model, for example, a DPD model, to compensate a signal before the signal enters the first PA; and/or the first compensation model includes a post-compensation model, for example, a DPoD model, to compensate a signal after the first PA outputs the signal.

Optionally, the first compensation model includes a phase distortion compensation model, to compensate for phase distortion in non-linear distortion caused by the first PA to a signal; and/or the first compensation model includes an amplitude distortion compensation model, to compensate for amplitude distortion in non-linear distortion caused by the first PA to a signal.

Optionally, when the first signal is a signal above 6 GHz, the first compensation model is described as follows: For example, when the non-linear distortion compensated for by the first compensation model includes phase distortion, the first compensation model meets the following formula:

$$f_{AM-PM}(x) = -\frac{Ax^q}{\left(1+\left(\frac{x}{B}\right)^q\right)} \qquad \text{Formula (3)}$$

where $x$ represents an amplitude (voltages) of an input signal of the first compensation model, $f_{AM-PM}(x)$ represents an output signal of the first compensation model, and $A, B,$ and $q$ represent model parameters of the first compensation model.

It should be understood that, in Formula (3), the subscript 'AM-PM' indicates to determine phase information of the output signal of the first compensation model based on amplitude information of the input signal of the first compensation model. $A, B, q$ and other model parameters may be obtained by performing S602.

For another example, when the non-linear distortion compensated for by the first compensation model includes amplitude distortion, the first compensation model meets the following formula:

$$f_{AM-AM}(x) = \frac{x}{\left(1-\left(\frac{Gx}{V}\right)^{2p}\right)^{\frac{1}{2p}}} \qquad \text{Formula (4)}$$

where $x$ represents an amplitude of an input signal of the first compensation model, $f_{AM-AM}(x)$ represents an output signal of the first compensation model, and $G, V,$ and $p$ represent model parameters of the first compensation model.

It should be understood that, in Formula (4), the subscript 'AM-AM' indicates to determine amplitude information of the output signal of the first compensation model based on amplitude information of the input signal of the first compensation model. $G, V, p$ and other model parameters may be obtained by performing S602.

Optionally, when the first signal is a signal below 6 GHz, the first compensation model is described as follows: For example, when the non-linear distortion compensated for by the first compensation model includes phase distortion, the first compensation model meets the following formula:

$$f_{AM-PM}(x) = -(p_0 + p_1 x^1 + p_2 x^2 + \cdots + p_9 x^9) \qquad \text{Formula (5)}$$

where $x$ represents an amplitude of an input signal of the first compensation model, $f_{AM-PM}(x)$ represents an output signal of the first compensation model, and $p_0, p_1, \ldots,$ and $p_9$ represent model parameters of the first compensation model.

It should be understood that, in Formula (5), the subscript 'AM-PM' indicates to determine phase information of the output signal of the first compensation model based on amplitude information of the input signal of the first compensation model. $p_0, p_1, \ldots, p_9$ and other model parameters may be obtained by performing S602.

For another example, when the non-linear distortion compensated for by the first compensation model includes amplitude distortion, the first compensation model meets the following formula:

$$f_{AM-AM}(x) = (a_0 + a_1 x^1 + a_2 x^2 + \cdots + a_9 x^9) \qquad \text{Formula (6)}$$

where $x$ represents an amplitude of an input signal of the first compensation model, $f_{AM-AM}(x)$ represents an output signal of the first compensation model, and $a_0, a_1, \ldots,$ and $a_9$ represent model parameters of the first compensation model.

It should be understood that, in Formula (6), the subscript 'AM-AM' indicates to determine amplitude information of the output signal of the first compensation model based on amplitude information of the input signal of the first compensation model. $a_0, a_1, \ldots, a_9$ and other model parameters may be obtained by performing S602.

Optionally, the non-linear distortion compensated for by the first compensation model includes non-linear distortion caused to a signal by the first PA in the first operating state in a process of performing amplification processing by using the first gain. For the first operating state of the first PA, refer to the descriptions of S601. Details are not described again.

In this application, because non-linear distortion of the first PA is affected by an operating state of the first PA, the first compensation model determined by the first device is also related to an operating state of the first PA. For example, the first compensation model matches the first PA in the first operating state, that is, the first compensation model can compensate for non-linear distortion caused to a signal by the first PA in the first operating state. This improves accuracy of the compensation model.

For example, an implementation process of S602 includes the following operations.

Step a: The first device determines an ideal linearly amplified signal based on the first gain.

For example, the ideal linearly amplified signal meets the following formula:

$$y_1 = G_1 * x_1 \qquad \text{Formula (7)}$$

where $y_1$ represents the ideal linearly amplified signal, $G_1$ represents the first gain, and xi represents a signal that is not linearly amplified.

It should be understood that the signal $x_1$ that is not linearly amplified is a signal known to both the first device and the second device.

It should be understood that the linearly amplified signal $y_1$ does not include non-linear distortion, for example, non-linear distortion caused to a signal by the PA in an amplification process.

Step b: The first device determines the first compensation model based on a difference between the first signal and the ideal linearly amplified signal.

A difference between the first signal and the ideal linearly amplified signal may be represented by using an error vector magnitude (error vector magnitude, EVM), or may be represented by using another parameter. This is not limited in this application.

For example, the first device performs AI learning based on the difference between the first signal and the ideal linearly amplified signal, to obtain the first compensation model.

It should be noted that, in this application, the EVM is an error vector magnitude, and can reflect distortion of a signal constellation point. An error vector is a vector including an amplitude and a phase, is a vector difference between an ideal linearly amplified signal and an actually amplified signal (for example, the first signal) at a given moment, and can be used to comprehensively measure an amplitude error and a phase error of a signal.

It should be noted that the communication method in this application may be applied to different scenarios.

For example, in a model training scenario, that the first device determines the first compensation model based on the first signal and the first gain may be understood as that the first device obtains the first compensation model through training based on the first signal and the first gain.

For another example, in a model update scenario, that the first device determines the first compensation model based on the first signal and the first gain may be understood as that the first device updates a part of model parameters in the first compensation model based on the first signal and the first gain.

In some embodiments, after determining the first compensation model, the first device further performs S603: S603: The first device sends a first parameter.

For example, the first device sends the first parameter to the second device. Correspondingly, the second device receives the first parameter from the first device.

The first parameter is described as follows:
The first parameter indicates the difference between the first signal and the ideal signal. For details, refer to the descriptions of step b. Details are not described again.

It should be noted that S603 is an optional step. The first device may perform S603, or may not perform S603.

For example, in the model training scenario, the first device may perform S603, so that the second device determines the first compensation model based on the first parameter.

For another example, in the model update scenario, the first device may not perform S603. For example, when the first device communicates with the second device by using a radio channel, the first device may not perform S603, to save an air interface resource. Alternatively, if precision of the first signal meets a requirement, the first device may not perform S603. That the precision of the first signal meets the requirement may include: The difference between the first signal and the ideal signal is within a specific range, or the difference between the first signal and the ideal signal is less than a threshold. Certainly, in the model update scenario, the first device may perform S603, so that the second device updates the first compensation model based on the first parameter. This improves accuracy of signal compensation performed by the compensation model.

The foregoing describes a process of determining the first compensation model.

It is easy to understand that, from related descriptions of FIG. 6, it can be learned that the first compensation model is a compensation model trained for the first operating state of the first PA. A same PA (that is, the first PA) may have two or more operating states, and non-linear distortion of the same PA is affected by the operating states of the PA. In this case, different compensation models may be trained for different operating states of the same PA (that is, the first PA). The following uses a second operating state of the first PA as an example to describe a compensation model trained for the second operating state of the first PA. In this application, the compensation model trained for the second operating state of the first PA is denoted as a second compensation model.

The following describes a process of determining the second compensation model.

The following describes, in detail with reference to FIG. 7, the communication method proposed in this embodiment of this application. As shown in FIG. 7, the communication method proposed in this embodiment of this application includes the following operations.

S701: The second device sends a second signal and second information to the first device. Correspondingly, the first device receives the second signal and the second information from the second device.

For example, for the first device and the second device, refer to the descriptions of S601. Details are not described again.

The second signal is described as follows:

The second signal is a signal obtained by the first PA in the second operating state through amplification processing using a second gain.

For example, the second signal may be a data signal, or may be a reference signal. This is not limited in this application. The first PA may be a component in the second device.

It should be noted that, in this application, the first operating state of the first PA is different from the second operating state.

For example, the second operating state of the first PA includes at least one of the following: an operating frequency of the first PA is an operating frequency 2, an operating bandwidth of the first PA is an operating bandwidth 2, a temperature of the first PA is a temperature 2, output power of the first PA is power 2, or a RAT used by the first PA is a communication standard 2, for example, a 4G communication standard.

That is, that the first operating state is different from the second operating state may be understood as that the first PA is different in at least one of the operating frequency, the operating bandwidth, the temperature, and the RAT.

It should be noted that, in this application, the first gain may be the same as the second gain. It may be understood as that although non-linear distortion presented when the first PA is in the first operating state is different from non-linear distortion presented when the first PA is in the second operating state, the first PA may perform amplification processing by using a same gain.

Alternatively, the first gain may be different from the second gain. It may be understood as that the first PA may perform amplification processing by using different gains.

Optionally, the second signal includes a signal obtained by the first PA in the second operating state through amplification processing using the second gain in the non-linear region.

That is, a part of or all signals of the second signal are signals obtained through amplification processing in the non-linear region of the first PA. Non-linear distortion of the signal obtained through amplification processing in the non-linear region of the first PA is obvious. In this way, the first device may determine the second compensation model based on the signal with obvious non-linear distortion. This helps to improve accuracy of the compensation model.

Optionally, the second signal includes a third reference signal and a fourth reference signal. The third reference signal and the fourth reference signal are adjacent in time domain and/or frequency domain. Power of the third reference signal is third power, and the third power is in the linear region of the first PA. Power of the fourth reference signal is fourth power, and the fourth power is in the non-linear region of the first PA.

That is, the third reference signal and the fourth reference signal are adjacent in time domain and/or frequency domain, so that radio channel characteristics in transmitting the third reference signal and the fourth reference signal are the same or similar. In this way, the first device may perform channel estimation based on the third reference signal, perform channel estimation based on the fourth reference signal, and determine the second compensation model based on channel estimation results of the fourth reference signal and the third reference signal. This helps to improve accuracy of the compensation model.

Optionally, the second signal may be a signal below 6 GHz, or the second signal may be a signal above 6 GHz.

The second information is described as follows:

The second information indicates the second gain. For example, the second information includes the second gain. The second gain may be denoted as $G_2$.

Optionally, the second information is carried in one of the following:

For example, the second information is carried on a data channel. For example, the second information is carried in a header of a data packet.

For another example, the second information is carried in a signaling message. For example, the second information is carried in RRC signaling, DCI, UCI, or SCI.

For the first device, after receiving the second signal and the second information, the first device performs S702:

S702: The first device determines the second compensation model based on the second signal and the second gain.

The second compensation model is described as follows:

The second compensation model is used to compensate for non-linear distortion. The non-linear distortion compensated for by the second compensation model includes non-linear distortion caused to a signal by the first PA in the second operating state in a process of performing amplification processing by using the second gain.

It should be understood that, in this application, the first compensation model is at least partially the same as the second compensation model.

For example, when a compensation model (for example, the first compensation model and/or the second compensation model) includes a static part and a dynamic part, the static part of the compensation model is used to compensate for non-linear distortion caused to a signal when the PA is affected by a hardware structure, and the dynamic part of the compensation model is used to compensate for non-linear distortion caused to a signal when the PA is affected by an operating state. In this way, two compensation models (for example, the first compensation model and the second compensation model) trained for different operating states of a same PA are at least partially the same. This helps to reduce an operational amount of the first device.

In addition, the compensation model (for example, the first compensation model and/or the second compensation model) may alternatively not be divided into a static part and a dynamic part. This is not limited in this application.

Optionally, the second compensation model includes a pre-compensation model, and/or the second compensation model includes a post-compensation model. Refer to the descriptions of S602. Details are not described again.

Optionally, the second compensation model includes a phase distortion compensation model, and/or the second compensation model includes an amplitude distortion compensation model. Refer to the descriptions of S602. Details are not described again.

Optionally, for a form of a formula that the second compensation model meets, refer to the descriptions of S602. Details are not described again.

For example, for an implementation process of S702, refer to the descriptions of S602. Details are not described again.

In this application, because non-linear distortion of the first PA is affected by an operating state of the first PA, the second compensation model determined by the first device is also related to an operating state of the first PA. For example, the second compensation model matches the first PA in the second operating state, that is, the second compensation model can compensate for non-linear distortion caused to a signal by the first PA in the second operating state. This improves accuracy of the compensation model.

That is, the first device trains different compensation models for the same PA in different operating states, so that the compensation models match the operating states of the first PA, to compensate for non-linear distortion caused to signals by the first PA in the different operating states.

The foregoing describes the process of determining the second compensation model.

It is easy to understand that, from related descriptions of FIG. 6 or FIG. 7, it can be learned that the first compensation model and the second compensation model are different compensation models trained for the first PA. Different PAs may have different hardware structures, and non-linear distortion of a same PA is also affected by a hardware structure of the PA. In this case, different compensation models may be trained for PAs of different hardware structures. The following uses a second PA as an example to describe a compensation model trained for the second PA. In this application, the compensation model trained for the second PA is denoted as a third compensation model.

The following describes a process of determining the third compensation model.

The following describes, in detail with reference to FIG. 8, the communication method proposed in this embodiment of this application. As shown in FIG. 8, the communication method proposed in this embodiment of this application includes the following operations.

S801: A third device sends a third signal and third information to the first device. Correspondingly, the first device receives the third signal and the third information from the third device.

For example, for the first device and the third device, refer to the descriptions of S601. Details are not described again. It should be understood that the third device and the second device may be a same device, or may be different devices. This is not limited in this application.

The third signal is described as follows:
The third signal is a signal obtained by the second PA through amplification processing using a third gain.

For example, the third signal may be a data signal, or may be a reference signal. This is not limited in this application.

It should be noted that the second PA may be a component in the third device. The second PA and the first PA are different PAs. For example, the second PA is different from the first PA in hardware structures. The third gain may be the same as or different from the first gain. This is not limited in this application.

It should be noted that, in this application, the third device is described as follows:
The third device may be a device different from the first device, and a PA (that is, the second PA) included in the third device is different from the first PA in hardware structures. Alternatively, the third device may be a device that is the same as the first device. In this case, the first device may include two PAs, namely, the first PA and the second PA, and the second PA is different from the first PA in hardware structures. This is not limited in this application.

Alternatively, the third device may be a device different from the second device, and a PA (that is, the second PA) included in the third device is different from the first PA in the second device in hardware structures. Alternatively, the third device may be a device that is the same as the second device, the second device includes two PAs, that is, the first PA and the second PA, and the second PA is different from the first PA in hardware structures. This is not limited in this application.

Optionally, the third signal includes a signal obtained by the second PA through amplification processing using the third gain in a non-linear region.

That is, a part of or all signals of the third signal are signals obtained through amplification processing in the non-linear region of the second PA. Non-linear distortion of the signal obtained through amplification processing in the non-linear region of the second PA is obvious. In this way, the first device may determine the third compensation model based on the signal with obvious non-linear distortion. This helps to improve accuracy of the compensation model.

Optionally, the third signal includes a fifth reference signal and a sixth reference signal. The fifth reference signal and the sixth reference signal are adjacent in time domain and/or frequency domain. Power of the fifth reference signal is fifth power, and the fifth power is located in a linear region of the second PA. Power of the sixth reference signal is sixth power, and the sixth power is located in a non-linear region of the second PA.

That is, the fifth reference signal and the sixth reference signal are adjacent in time domain and/or frequency domain, so that radio channel characteristics in transmitting the fifth reference signal and the sixth reference signal are the same or similar. In this way, the first device may perform channel estimation based on the fifth reference signal, perform channel estimation based on the sixth reference signal, and determine the third compensation model based on channel estimation results of the sixth reference signal and the fifth reference signal. This helps to improve accuracy of the compensation model.

Optionally, the third signal may be a signal below 6 GHz, or the third signal may be a signal above 6 GHz.

The third information is described as follows:

The third information indicates the third gain. For example, the third information includes the third gain. The third gain may be denoted as $G_3$.

Optionally, the third information is carried in one of the following:

For example, the third information is carried on a data channel. For example, the third information is carried in a header of a data packet.

For another example, the third information is carried in a signaling message. For example, the third information is carried in RRC signaling, DCI, UCI, or SCI.

For the first device, after receiving the third signal and the third information, the first device performs S802:

S802: The first device determines the third compensation model based on the third signal and the third gain.

The third compensation model is described as follows:

The third compensation model is used to compensate for non-linear distortion. The non-linear distortion compensated for by the third compensation model includes non-linear distortion caused to a signal by the second PA in a process of performing amplification processing by using the third gain.

It should be understood that, in this application, when the first PA and the second PA have different hardware structures, the first compensation model is at least partially different from the third compensation model.

For example, when a compensation model (for example, the first compensation model and/or the third compensation model) includes a static part and a dynamic part, the static part of the compensation model is used to compensate for non-linear distortion caused to a signal when the PA is affected by a hardware structure, and the dynamic part of the compensation model is used to compensate for non-linear distortion caused to a signal when the PA is affected by an operating state. In this way, two compensation models (for example, the first compensation model and the third compensation model) trained for PAs of different hardware structures are at least partially different. This helps improve accuracy of the compensation models.

In addition, the compensation model (for example, the first compensation model and/or the third compensation model) may alternatively not be divided into a static part and a dynamic part. This is not limited in this application.

Optionally, the third compensation model includes a pre-compensation model, and/or the third compensation model includes a post-compensation model. Refer to the descriptions of S602. Details are not described again.

Optionally, the third compensation model includes a phase distortion compensation model, and/or the third compensation model includes an amplitude distortion compensation model. Refer to the descriptions of S602. Details are not described again.

Optionally, for a form of a formula that the third compensation model meets, refer to the descriptions of S602. Details are not described again.

For example, for an implementation process of S802, refer to the descriptions of S602. Details are not described again.

In this application, because non-linear distortion of a PA is affected by both a hardware structure of the PA and an operating state of the PA, the third compensation model determined by the first device is also related to the hardware structure of the PA. For example, the third compensation model matches the second PA, that is, the third compensation model can compensate for non-linear distortion caused by the second PA to a signal. This improves accuracy of the compensation model.

That is, the first device trains different compensation models for PAs of different hardware structures, so that the compensation models match the hardware structures of the PAs, to compensate for non-linear distortion caused to signals by the PAs of the different hardware structures.

It should be noted that, in this application, a compensation model (for example, the first compensation model, the second compensation model, or the third compensation model) may be used to compensate a signal in time domain, as described with reference to FIG. 4. In this case, the foregoing signal (for example, the first signal, the second signal, or the third signal) may be described as a time domain signal. The time domain signal may include the foregoing data signal, or may include the foregoing reference signal.

Similarly, the compensation model (for example, the first compensation model, the second compensation model, or the third compensation model) may be used to compensate a signal in frequency domain, as described with reference to FIG. 5. In this case, the foregoing signal (for example, the first signal, the second signal, or the third signal) may be described as a frequency domain signal. The frequency domain signal may include the foregoing data signal, or may include the foregoing reference signal.

The foregoing describes a process of training a compensation model (for example, the first compensation model, the second compensation model, or the third compensation model).

The following describes a process of monitoring the compensation model.

It may be understood that, in a process of applying the compensation model, whether the compensation model operates normally is monitored.

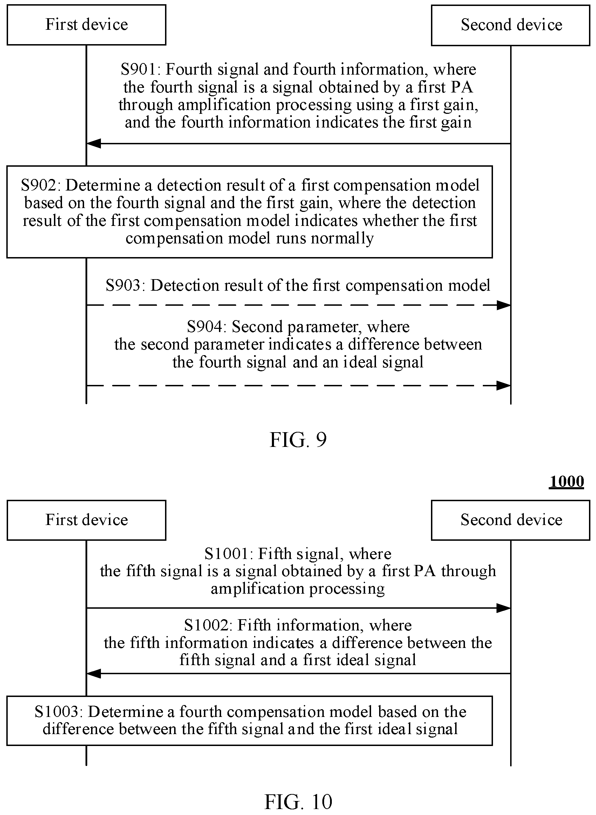

The following describes, in detail with reference to FIG. 9, the communication method proposed in this embodiment of this application. As shown in FIG. 9, the communication method proposed in this embodiment of this application includes the following operations.

S901: The second device sends a fourth signal and fourth information to the first device. Correspondingly, the first device receives the fourth signal and the fourth information from the second device.

For example, for the first device and the second device, refer to the descriptions of S601. Details are not described again.

The fourth signal is described as follows:

The fourth signal is a signal obtained by the first PA through amplification processing using the first gain. The first PA may be a component in the second device.

Optionally, the fourth signal includes a signal obtained by the first PA through amplification processing using the first gain in the non-linear region. Refer to the descriptions of S601. Details are not described again.

Optionally, the fourth signal includes a seventh reference signal and an eighth reference signal. The seventh reference signal and the eighth reference signal are adjacent in time domain and/or frequency domain. Power of the seventh reference signal is seventh power, and the seventh power is in the linear region of the first PA. Power of the eighth reference signal is eighth power, and the eighth power is in the non-linear region of the first PA. Refer to the descriptions of S601. Details are not described again. In some embodiments, the fourth signal may not include a data signal.

Optionally, the fourth signal may be a signal below 6 GHz, or the fourth signal may be a signal above 6 GHz.

The fourth information is described as follows:

The fourth information indicates the first gain. For example, the fourth information includes the fourth gain.

Optionally, the fourth information is carried in one of the following:

For example, the fourth information is carried on a data channel. For example, the fourth information is carried in a header of a data packet.

For another example, the fourth information is carried in a signaling message. For example, the fourth information is carried in RRC signaling, DCI, UCI, or SCI.

For the first device, after receiving the fourth signal and the fourth information, the first device performs S902: S902: The first device determines a detection result of the first compensation model based on the fourth signal and the first gain.

The first compensation model is described as follows:

The first compensation model is used to compensate for non-linear distortion. The non-linear distortion compensated for by the first compensation model includes non-linear distortion caused to a signal by the first PA in a process of performing amplification processing by using the first gain. Refer to the descriptions of S602. Details are not described again.

The detection result of the first compensation model indicates whether the first compensation model runs normally.

For example, S902 includes the following operations.

Step 1: The first device determines an ideal linearly amplified signal based on the first gain. For details, refer to the descriptions of step a in S602. Details are not described again.

Step 2: The first device determines the detection result of the first compensation model based on a difference between the first signal and the ideal linearly amplified signal.

For example, if the difference between the first signal and the ideal linearly amplified signal is less than a threshold, the detection result of the first compensation model is that the first compensation model runs normally.

For another example, if the difference between the first signal and the ideal linearly amplified signal is greater than or equal to the threshold, the detection result of the first compensation model is that the first compensation model runs abnormally.

That is, in a process of applying the first compensation model, the first device can determine, based on the received fourth signal and fourth information, whether the first compensation model runs normally, thereby achieving an effect of monitoring a running status of the compensation model. For example, if the first compensation model runs abnormally, the communication system may perform processing in time. This helps to improve performance of the communication system.

In some embodiments, after determining the detection result of the first compensation model, the first device further performs S903:

S903: The first device sends the detection result of the first compensation model.

For example, the first device sends the detection result of the first compensation model to the second device. Correspondingly, the second device receives the detection result of the first compensation model from the first device.

For the detection result of the first compensation model, refer to the descriptions of S902. Details are not described again.

That is, the first device feeds back the detection result of the first compensation model, so that the second device learns of the running status of the first compensation model, thereby achieving an effect of monitoring the running status of the compensation model.

In some embodiments, after determining the detection result of the first compensation model, the first device further performs S904:

S904: The first device sends a second parameter.

For example, the first device sends the second parameter to the second device. Correspondingly, the second device receives the second parameter from the first device.

The second parameter is described as follows:

The second parameter indicates the difference between the fourth signal and the ideal signal. For example, the second parameter may be an EVM of a specific value. For details, refer to the descriptions of step b in S602. Details are not described again.

It should be noted that S904 is an optional step. The first device may perform S904, or may not perform S904.

For example, when the first compensation model runs abnormally, the first device may perform S904, so that the second device trains or updates a compensation model based on the second parameter. This improves accuracy of signal compensation performed by the compensation model.

For another example, when the first compensation model runs normally, the first device may not perform S904. This helps to save a transmission resource. Alternatively, if precision of the fourth signal meets a requirement, the first device may not perform S904. That the precision of the fourth signal meets the requirement may include: The difference between the fourth signal and the ideal signal is within a specific range, or the difference between the fourth signal and the ideal signal is less than a threshold. Certainly, the first device may perform S904. This is not limited in this application.

Embodiment 2

In view of this, this embodiment of this application provides another communication method. The method may be applied to the communication system shown in FIG. 1. In the communication method provided in this embodiment of this application, a first device sends a fifth signal. The fifth signal is a signal obtained by a first PA through amplification processing. The first device receives fifth information. The fifth information indicates a difference between the fifth signal and a first ideal signal. The first device determines a fourth compensation model based on the difference between the fifth signal and the first ideal signal. The fourth compensation model is used to compensate for non-linear distortion, and the non-linear distortion compensated for by the fourth compensation model includes non-linear distortion caused to a signal by the first PA in a process of performing amplification processing.

That is, after sending the fifth signal, the first device can receive the fifth information, and then determine, based on the difference (that is, the difference between the fifth signal and the first ideal signal) indicated by the fifth information, the fourth compensation model used to compensate for non-linear distortion. Because the fifth signal is a signal obtained by the first PA through amplification processing, the fifth signal can present non-linear distortion caused to a signal by the first PA in a specific operating state. In addition, the fifth information indicates the difference between the fifth signal and the first ideal signal, so that the first device determines the fourth compensation model based on the difference between the fifth signal and the first ideal signal. In this way, the fourth compensation model can match the first PA in actual operation, to accurately compensate for non-linear distortion caused by the first PA to a signal, without approximate mathematical modeling on the first PA. This helps to enable high QAM and improve transmission efficiency of the communication system.

It should be understood that names of messages between devices, names of parameters in the messages, or the like in the following embodiments of this application are merely examples, and there may be other names during specific implementation. This is not specifically limited in embodiments of this application. This is noted herein once for all, and is not repeated below.

The following describes, in detail with reference to FIG. 10, the communication method proposed in this embodiment of this application. As shown in FIG. 10, the communication method 1000 proposed in this embodiment of this application includes the following operations.

S1001: A first device sends a fifth signal to a second device. Correspondingly, the second device receives the fifth signal from the first device.

For example, for the first device and the second device, refer to the descriptions of S601. Details are not described again.

The fifth signal is described as follows:

The fifth signal is a signal obtained by a first PA through amplification processing.

For example, the fifth signal may be a data signal, or may be a reference signal. This is not limited in this application. The first PA may be a component in the second device.

Optionally, the fifth signal includes a signal obtained by the first PA through amplification processing in a non-linear region. Refer to the descriptions of S601. Details are not described again.

Optionally, the fifth signal includes a ninth reference signal and a tenth reference signal. The ninth reference signal and the tenth reference signal are adjacent in time domain and/or frequency domain. Power of ninth first reference signal is ninth power, and the ninth power is in a linear region of the first PA. Power of the tenth reference signal is tenth power, and the tenth power is in a non-linear region of the first PA. Refer to the descriptions of S601. Details are not described again.

Optionally, the fifth signal may be a signal below 6 GHz, or the fifth signal may be a signal above 6 GHz.

For the second device, after receiving the fifth signal, the second device performs S1002:

S1002: The second device sends fifth information to the first device. Correspondingly, the first device receives the fifth information from the second device.

The fifth information is described as follows:

The fifth information indicates a difference between the fifth signal and a first ideal signal. For example, the fifth information includes a first EVM. The first EVM may be denoted as $EVM_1$. The first EVM is used to represent the difference between the fifth signal and the first ideal signal.

It should be noted that the first ideal signal may be a signal known to the second device. The first ideal signal may be understood as a signal that does not include non-linear distortion, for example, a signal obtained by the first PA through ideal linear amplification processing. In other words, the first ideal signal does not have non-linear distortion caused to a signal by the first PA in an amplification process.

Optionally, the fifth information is carried in one of the following:

For example, the fifth information is carried on a data channel. For example, the fifth information is carried in a header of a data packet.

For another example, the fifth information is carried in a signaling message. For example, the fifth information is carried in RRC signaling, DCI, UCI, or SCI.

Optionally, the fifth information is associated with a first operating state of the first PA. The first operating state is an operating state when the first PA performs amplification processing on the fifth signal. For the first operating state of the first PA, refer to the descriptions of S601. Details are not described again.

In this application, because non-linear distortion of the first PA is affected by an operating state of the first PA, the fifth information is associated with the first operating state of the first PA, so that a fourth compensation model determined by the first device is also related to the operating state of the first PA. For example, the fourth compensation model matches the first PA in the first operating state, so that the fourth compensation model can compensate for non-linear distortion caused to a signal by the first PA in the first operating state.

For the first device, after receiving the fifth information, the first device performs S1003:

S1003: The first device determines the fourth compensation model based on the difference between the fifth signal and the first ideal signal.

The fourth compensation model is described as follows:

The fourth compensation model is used to compensate for non-linear distortion. The non-linear distortion compensated for by the fourth compensation model includes non-linear distortion caused to a signal by the first PA in a process of performing amplification processing.

Optionally, the fourth compensation model includes a pre-compensation model, and/or the fourth compensation model includes a post-compensation model. Refer to the descriptions of S602. Details are not described again.

Optionally, the fourth compensation model includes a phase distortion compensation model, and/or the fourth compensation model includes an amplitude distortion compensation model. Refer to the descriptions of S602. Details are not described again.

Optionally, for a form of a formula that the fourth compensation model meets, refer to the descriptions of S602. Details are not described again.

Optionally, the non-linear distortion compensated for by the fourth compensation model includes non-linear distortion caused to a signal by the first PA in the first operating state in a process of performing amplification processing. For the first operating state of the first PA, refer to the descriptions of S601. Details are not described again.

In this application, because non-linear distortion of the first PA is affected by an operating state of the first PA, the fourth compensation model determined by the first device is also related to an operating state of the first PA. For example, the fourth compensation model matches the first PA in the first operating state, that is, the fourth compensation model can compensate for non-linear distortion caused to a signal by the first PA in the first operating state. This improves accuracy of the compensation model.

For example, an implementation process of S1003 includes: The first device performs AI learning based on the difference between the fifth signal and the first ideal signal, to obtain the fourth compensation model.

It should be noted that the communication method in this application may be applied to different scenarios.

For example, in a model training scenario, that the first device determines the fourth compensation model based on the difference between the fifth signal and the first ideal signal may be understood as that the first device obtains the fourth compensation model through training based on the difference between the fifth signal and the first ideal signal.

For another example, in a model update scenario, that the first device determines the fourth compensation model based on the difference between the fifth signal and the first ideal signal may be understood as that the first device updates a part of model parameters of the fourth compensation model based on the difference between the fifth signal and the first ideal signal.

The foregoing describes a process of determining the fourth compensation model.

It is easy to understand that, from related descriptions of FIG. 10, it can be learned that the fourth compensation model is a compensation model trained for the first operating state of the first PA. A same PA (that is, the first PA) may have two or more operating states, and non-linear distortion of the same PA is affected by the operating states of the PA. In this case, different compensation models may be trained for different operating states of the same PA (that is, the first PA). The following uses a second operating state of the first PA as an example to describe a compensation model trained for the second operating state of the first PA. In this application, the compensation model trained for the second operating state of the first PA is denoted as a fifth compensation model.

The following describes a process of determining the fifth compensation model.

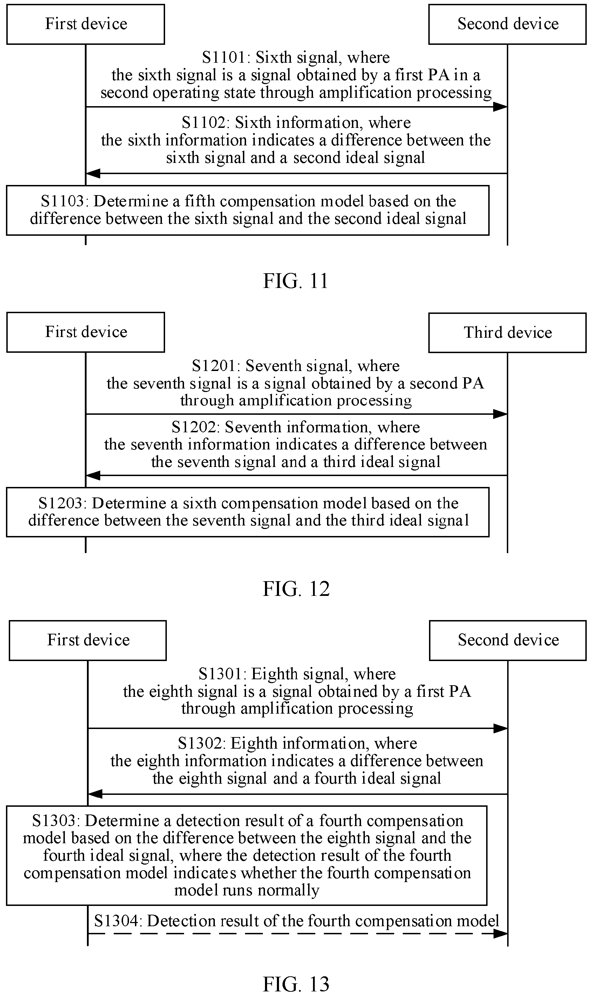

The following describes, in detail with reference to FIG. 11, the communication method proposed in this embodiment of this application. As shown in FIG. 11, the communication method proposed in this embodiment of this application includes the following operations.

S1101: The first device sends a sixth signal to the second device. Correspondingly, the second device receives the sixth signal from the first device.

For example, for the first device and the second device, refer to the descriptions of S601. Details are not described again.

The sixth signal is described as follows:

The sixth signal is a signal obtained by the first PA in the second operating state through amplification processing.

For example, the sixth signal may be a data signal, or may be a reference signal. This is not limited in this application. The first PA may be a component in the second device.

It should be noted that, in this application, the first operating state of the first PA is different from the second operating state. Refer to the descriptions of S701. Details are not described again.

Optionally, the sixth signal is a signal obtained by the first PA in the second operating state through amplification processing in the non-linear region. Refer to the descriptions of S601. Details are not described again.

Optionally, the sixth signal includes an eleventh reference signal and a twelfth reference signal. The eleventh reference signal and the twelfth reference signal are adjacent in time domain and/or frequency domain. Power of the eleventh reference signal is eleventh power, and the eleventh power is in a linear region of the first PA. Power of the twelfth reference signal is twelfth power, and the twelfth power is in a non-linear region of the first PA. Refer to the descriptions of S601. Details are not described again.

Optionally, the sixth signal may be a signal below 6 GHz, or the sixth signal may be a signal above 6 GHz.

For the second device, after receiving the sixth signal, the second device performs S1102:

S1102: The second device sends sixth information to the first device. Correspondingly, the first device receives the sixth information from the second device.

The sixth information is described as follows:

The sixth information indicates a difference between the sixth signal and a second ideal signal. For example, the sixth information includes an EVM of a specific value. For details, refer to the descriptions of S1002. Details are not described again.

It should be noted that in this application, the second ideal signal may be a signal known to the second device. The second ideal signal may be understood as a signal that does not include non-linear distortion, for example, a signal obtained by the first PA in the second operating state through ideal linear amplification processing. In other words, the second ideal signal does not have non-linear distortion caused to a signal by the first PA in an amplification process.

Optionally, the sixth information is carried in one of the following:

For example, the sixth information is carried on a data channel. For example, the sixth information is carried in a header of a data packet.

For another example, the sixth information is carried in a signaling message. For example, the sixth information is carried in RRC signaling, DCI, UCI, or SCI.

Optionally, the sixth information is associated with the second operating state of the first PA. The second operating state is an operating state when the first PA performs amplification processing on the sixth signal. For the second operating state of the first PA, refer to the descriptions of S601. Details are not described again.

In this application, because non-linear distortion of the first PA is affected by an operating state of the first PA, the sixth information is associated with the second operating state of the first PA, so that a fifth compensation model determined by the first device is also related to the operating state of the first PA. For example, the fifth compensation model matches the first PA in the second operating state, so that the fifth compensation model can compensate for non-linear distortion caused to a signal by the first PA in the second operating state.

For the first device, after receiving the sixth information, the first device performs S1103:

S1103: The first device determines the fifth compensation model based on the difference between the sixth signal and the second ideal signal.

The fifth compensation model is described as follows:

The fifth compensation model is used to compensate for non-linear distortion. The non-linear distortion compensated for by the fifth compensation model includes non-linear distortion caused to a signal by the first PA in the second operating state in a process of performing amplification processing.

In this application, because non-linear distortion of the first PA is affected by an operating state of the first PA, the fifth compensation model determined by the first device is also related to an operating state of the first PA. For example, the fifth compensation model matches the first PA in the second operating state, that is, the fifth compensation model can compensate for non-linear distortion caused to a signal by the first PA in the second operating state. This improves accuracy of the compensation model.

That is, the first device trains different compensation models, for example, the fourth compensation model and the fifth compensation model, for the same PA in different operating states, so that the compensation models match the operating states of the first PA, to compensate for non-linear distortion caused to signals by the first PA in the different operating states.

Optionally, the fifth compensation model includes a pre-compensation model, and/or the fifth compensation model includes a post-compensation model. Refer to the descriptions of S602. Details are not described again.

Optionally, the fifth compensation model includes a phase distortion compensation model, and/or the fifth compensation model includes an amplitude distortion compensation model. Refer to the descriptions of S602. Details are not described again.

Optionally, for a form of a formula that the fifth compensation model meets, refer to the descriptions of S602. Details are not described again.

The foregoing describes the process of determining the fifth compensation model.

It is easy to understand that, from related descriptions of FIG. 10 or FIG. 11, it can be learned that the fourth compensation model and the fifth compensation model are different compensation models trained for the first PA. Different PAs may have different hardware structures, and non-linear distortion of a same PA is also affected by a hardware structure of the PA. In this case, different compensation models may be trained for PAs of different hardware structures. The following uses a second PA as an example to describe a compensation model trained for the second PA. In this application, the compensation model trained for the second PA is denoted as a sixth compensation model.

The following describes a process of determining the sixth compensation model.

The following describes, in detail with reference to FIG. 12, the communication method proposed in this embodiment of this application. As shown in FIG. 12, the communication method proposed in this embodiment of this application includes the following operations.

S1201: The first device sends a seventh signal to a third device. Correspondingly, the third device receives the seventh signal from the first device.

For example, for the first device and the third device, refer to the descriptions of S601. Details are not described again. It should be understood that the third device and the second device may be a same device, or may be different devices. This is not limited in this embodiment of this application.

The seventh signal is described as follows:

The seventh signal is a signal obtained by the second PA through amplification processing.

For example, the seventh signal may be a data signal, or may be a reference signal. This is not limited in this application. The second PA may be a component in the third device.

Optionally, the seventh signal includes a signal obtained by the second PA through amplification processing in a non-linear region. Refer to the descriptions of S601. Details are not described again.

Optionally, the seventh signal includes a thirteenth reference signal and a fourteenth reference signal. The thirteenth reference signal and the fourteenth reference signal are adjacent in time domain and/or frequency domain. Power of the thirteenth reference signal is thirteenth power, and the thirteenth power is located in a linear region of the second PA. Power of the fourteenth reference signal is fourteenth power, and the fourteenth power is in a non-linear region of the second PA. Refer to the descriptions of S601. Details are not described again.

Optionally, the seventh signal may be a signal below 6 GHz, or the seventh signal may be a signal above 6 GHz.

For the third device, after receiving the seventh signal, the third device performs S1202:

S1202: The third device sends seventh information to the first device. Correspondingly, the first device receives the seventh information from the third device.

The seventh information is described as follows:

The seventh information indicates a difference between the seventh signal and a third ideal signal. For example, the seventh information includes an EVM of a specific value.

It should be noted that in this application, the third ideal signal may be a signal known to the third device. The third ideal signal may be understood as a signal that does not include non-linear distortion, for example, a signal obtained by the second PA through ideal linear amplification processing. In other words, the third ideal signal does not have non-linear distortion caused to a signal by the second PA in an amplification process.

Optionally, the seventh information is carried in one of the following:

For example, the seventh information is carried on a data channel. For example, the seventh information is carried in a header of a data packet.

For another example, the seventh information is carried in a signaling message. For example, the seventh information is carried in RRC signaling, DCI, UCI, or SCI.

For the first device, after receiving the seventh information, the first device performs S1203:

S1203: The first device determines the sixth compensation model based on the difference between the seventh signal and the third ideal signal.

The sixth compensation model is described as follows:

The sixth compensation model is used to compensate for non-linear distortion. The non-linear distortion compensated for by the sixth compensation model includes non-linear distortion caused to a signal by the second PA in a process of performing amplification processing.

Optionally, the sixth compensation model includes a pre-compensation model, and/or the sixth compensation model includes a post-compensation model. Refer to the descriptions of S602. Details are not described again.

Optionally, the sixth compensation model includes a phase distortion compensation model, and/or the sixth compensation model includes an amplitude distortion compensation model. Refer to the descriptions of S602. Details are not described again.

Optionally, for a form of a formula that the sixth compensation model meets, refer to the descriptions of S602. Details are not described again.

For example, for an implementation process of S1203, refer to the descriptions of S1003. Details are not described again.

In this application, because non-linear distortion of a PA is affected by both a hardware structure of the PA and an operating state of the PA, the sixth compensation model determined by the first device is also related to the hardware structure of the PA. For example, the sixth compensation model matches the second PA, that is, the sixth compensation model can compensate for non-linear distortion caused by the second PA to a signal. This improves accuracy of the compensation model.

That is, the first device trains different compensation models for PAs of different hardware structures, so that the compensation models match the hardware structures of the PAs, to compensate for non-linear distortion caused to signals by the PAs of the different hardware structures.

It should be noted that, in this application, a compensation model (for example, the fourth compensation model, the fifth compensation model, or the sixth compensation model) may be used to compensate a signal in time domain, as described with reference to FIG. 4. In this case, the foregoing signal (for example, the fifth signal, the sixth signal, or the seventh signal) may be described as a time domain signal. The time domain signal may include the foregoing data signal, or may include the foregoing reference signal.

Similarly, the compensation model (for example, the fourth compensation model, the fifth compensation model, or the sixth compensation model) may be used to compensate a signal in frequency domain, as described with reference to FIG. 5. In this case, the foregoing signal (for example, the fifth signal, the sixth signal, or the seventh signal) may be described as a frequency domain signal. The frequency domain signal may include the foregoing data signal, or may include the foregoing reference signal.

The foregoing describes a process of training a compensation model (for example, the fourth compensation model, the fifth compensation model, or the sixth compensation model).

The following describes a process of monitoring the compensation model.

It may be understood that, in a process of applying the compensation model, whether the compensation model operates normally is monitored.

The following describes, in detail with reference to FIG. 13, the communication method proposed in this embodiment of this application. As shown in FIG. 13, the communication method proposed in this embodiment of this application includes the following operations.

S1301: The first device sends an eighth signal to the second device. Correspondingly, the second device receives the eighth signal from the first device.

For example, for the first device and the second device, refer to the descriptions of S601. Details are not described again.

The eighth signal is described as follows:

The eighth signal is a signal obtained by the first PA through amplification processing. The first PA may be a component in the second device.

Optionally, the eighth signal includes a signal obtained by the first PA through amplification processing in the non-linear region. Refer to the descriptions of S601. Details are not described again.

Optionally, the eighth signal includes a fifteenth reference signal and a sixteenth reference signal. The fifteenth reference signal and the sixteenth reference signal are adjacent in time domain and/or frequency domain. Power of the fifteenth reference signal is fifteenth power, and the fifteenth power is located in the linear region of the first PA. Power of the sixteenth reference signal is sixteenth power, and the sixteenth power is in the non-linear region of the first PA. Refer to the descriptions of S601. Details are not described again. In some embodiments, the eighth signal may not include a data signal.

Optionally, the eighth signal may be a signal below 6 GHz, or the eighth signal may be a signal above 6 GHz.

For the second device, after receiving the eighth signal, the second device performs S1302:

S1302: The second device sends eighth information to the first device. Correspondingly, the first device receives the eighth information from the second information.

The eighth information is described as follows:

The eighth information indicates a difference between the eighth signal and a fourth ideal signal. For example, the eighth information includes an EVM of a specific value.

It should be noted that, in this application, the fourth ideal signal may be understood as a signal that does not include non-linear distortion, for example, a signal obtained by the first PA through ideal linear amplification processing. In other words, the fourth ideal signal does not have non-linear distortion caused to a signal by the first PA in an amplification process.

Optionally, the eighth information is carried in one of the following:

For example, the eighth information is carried on a data channel. For example, the eighth information is carried in a header of a data packet.

For another example, the eighth information is carried in a signaling message. For example, the eighth information is carried in RRC signaling, DCI, UCI, or SCI.

For the first device, after receiving the eighth information, the first device performs S1303:

S1303: The first device determines a detection result of the fourth compensation model based on the difference between the eighth signal and the fourth ideal signal.

The fourth compensation model is described as follows:

The fourth compensation model is used to compensate for non-linear distortion, and the non-linear distortion compensated for by the fourth compensation model includes non-linear distortion caused to a signal by the first PA in a process of performing amplification processing. Refer to the descriptions of S1003. Details are not described again.

The detection result of the fourth compensation model indicates whether the fourth compensation model runs normally.

For example, an implementation process of S1303 includes:

For example, if the difference between the eighth signal and the fourth ideal signal is less than a threshold, the detection result of the fourth compensation model is that the fourth compensation model runs normally.

For another example, if the difference between the eighth signal and the fourth ideal signal is greater than or equal to the threshold, the detection result of the fourth compensation model is that the fourth compensation model runs abnormally.

That is, in a process of applying the fourth compensation model, after sending the eighth signal, the first device can receive the eighth information, and then determine, based on the difference indicated by the eighth information, whether the fourth compensation model runs normally, thereby achieving an effect of monitoring a running status of the compensation model. For example, if the fourth compensation model runs abnormally, the communication system may perform processing in time. This helps to improve performance of the communication system.

In some embodiments, after determining the detection result of the fourth compensation model, the first device further performs S1304:

S1304: The first device sends the detection result of the fourth compensation model.

For example, the first device sends the detection result of the fourth compensation model to the second device. Correspondingly, the second device receives the detection result of the fourth compensation model from the first device.

For the detection result of the fourth compensation model, refer to the descriptions of S1303. Details are not described again.

That is, the first device feeds back the detection result of the fourth compensation model, so that the second device learns of the running status of the fourth compensation model, thereby achieving an effect of monitoring the running status of the compensation model.

The foregoing describes a training process and a monitoring process of a compensation model (for example, the first compensation model to the sixth compensation model) by using Embodiment 1 and Embodiment 2.

The following describes a process of selecting a compensation model.

It may be understood as how to select a compensation model from two or more compensation models after the compensation models are determined.

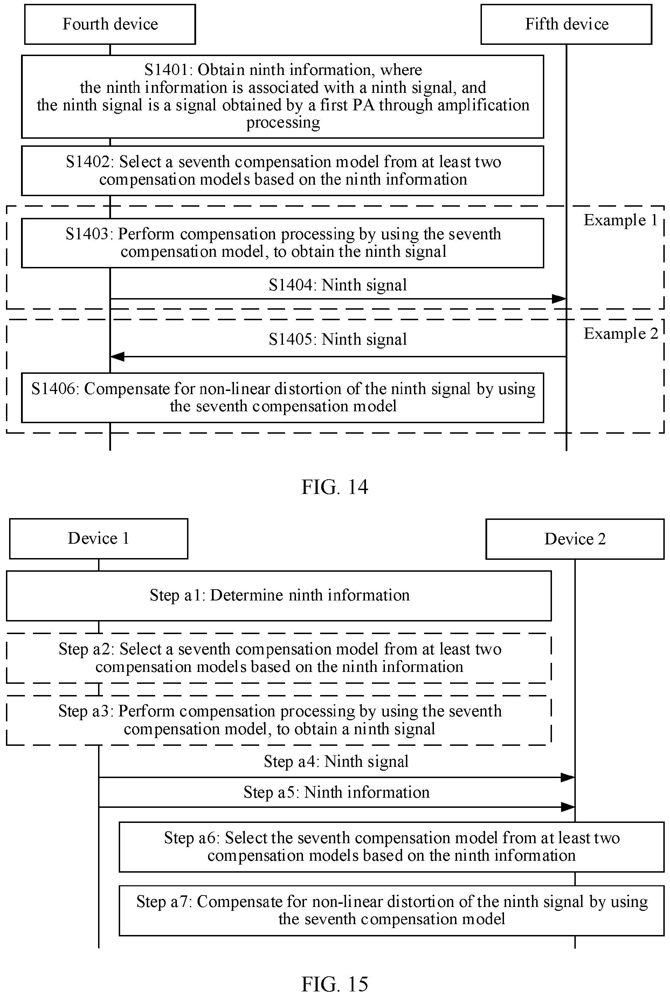

The following describes, in detail with reference to FIG. 14, a communication method proposed in an embodiment of this application. As shown in FIG. 14, the communication method proposed in this embodiment of this application includes the following operations.

S1401: A fourth device obtains ninth information.

For example, for the fourth device, refer to the descriptions of the first device in S601. Details are not described again.

The ninth information is described as follows:

The ninth information is associated with a ninth signal. The ninth signal is a signal obtained by a first PA through amplification processing. For example, the ninth signal may be a data signal, or may be a reference signal. This is not limited in this application.

For example, the ninth information is described with reference to two examples (the following Example 1 and Example 2):

> Example 1: That the ninth information is associated with the ninth signal may be understood as that the ninth information indicates a fourth gain, and the fourth gain is a gain used when the first PA performs amplification processing on the ninth signal.
>
> Example 2: That the ninth information is associated with the ninth signal may be understood as that the ninth information indicates a second EVM, and the second EVM is used to represent a difference between the ninth signal and a fifth ideal signal.

It should be noted that, in this application, the fifth ideal signal may be understood as a signal obtained by the first PA through ideal linear amplification processing. In other words, the fifth ideal signal does not have non-linear distortion caused to a signal by the first PA in an amplification process.

Optionally, the fourth device independently determines the ninth information.

For example, in FIG. 15, the fourth device may be a device 1, which independently determines the ninth information by performing step a1.

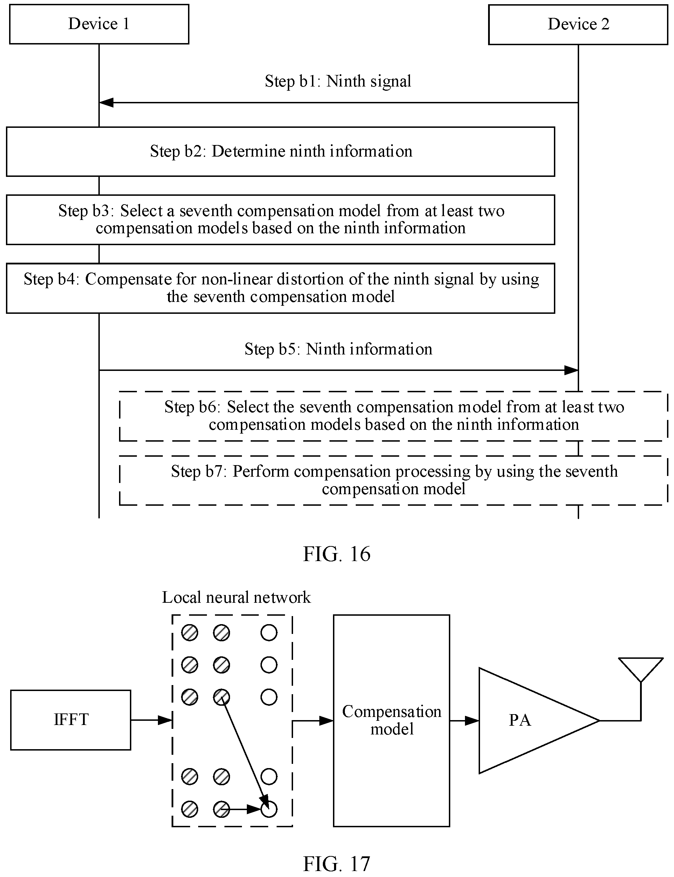

For another example, in FIG. 16, the fourth device may be a device 1, which independently determines the ninth information by performing step b2.

Alternatively, the fourth device receives the ninth information from another device.

For example, in FIG. 15, the fourth device may be a device 2, which receives the ninth information by performing step a5.

For another example, in FIG. 16, the fourth device may be a device 2, which receives the ninth information by performing step b5.

Optionally, the ninth signal may be a signal below 6 GHz, or the ninth signal may be a signal above 6 GHz.

For the fourth device, after obtaining the ninth information, the fourth device performs S1402:

S1402: The fourth device selects a seventh compensation model from at least two compensation models based on the ninth information.

The seventh compensation model is described as follows:

The seventh compensation model is used to compensate for non-linear distortion of the ninth signal, and the non-linear distortion of the ninth signal includes non-linear distortion caused to the ninth signal by the first PA in a process of performing amplification processing.

For example, S1402 is described with reference to two examples (the following Example 1 and Example 2):

Example 1: The at least two compensation models include the seventh compensation model and an eighth compensation model. The seventh compensation model is associated with the fourth gain, and the eighth compensation model is associated with a fifth gain.

In Example 1, the fourth device selects the seventh compensation model from the at least two compensation models based on the fourth gain indicated by the ninth information.

It should be noted that, in this application, that the seventh compensation model is associated with the fourth gain may be understood as that non-linear distortion compensated for by the seventh compensation model includes non-linear distortion caused to a signal by the first PA in a process of performing amplification processing by using the fourth gain. Similarly, that the eighth compensation model is associated with the fifth gain may be understood as that non-linear distortion compensated for by the eighth compensation model includes non-linear distortion caused to a signal by the first PA in a process of performing amplification processing by using the fifth gain.

Example 2: The at least two compensation models include the seventh compensation model and a ninth compensation model. The seventh compensation model is associated with the second EVM, and the ninth compensation model is associated with a third EVM.

In Example 2, the fourth device selects the seventh compensation model from the at least two compensation models based on the EVM indicated by the ninth information.

It should be noted that, in this application, that the seventh compensation model is associated with the second EVM may be understood as that the seventh compensation model is determined based on the second EVM. Refer to the descriptions of FIG. 10. Details are not described again. Similarly, that the ninth compensation model is associated with the third EVM may be understood as that the ninth compensation model is determined based on the third EVM. Refer to the descriptions of FIG. 10. Details are not described again.

In some embodiments, the fourth device serves as a transmit end of the ninth signal. As shown in a dashed box in which 'Example 1' is located in FIG. 14, after performing S1402, the fourth device further performs the following operations.

S1403: The fourth device performs compensation processing by using the seventh compensation model, to obtain the ninth signal.

For example, the seventh compensation model may be a pre-compensation model. Before a signal is input into the first PA, compensation processing is first performed by using the seventh compensation model, and then a signal obtained through the compensation processing is input into the first PA. The ninth signal is obtained through amplification processing of the first PA.

For example, the seventh compensation model compensates for amplitude distortion and/or phase distortion.

For example, in FIG. 15, the fourth device is the device 1, and the device 1 performs step a3 to pre-compensate for the non-linear distortion of the ninth signal.

S1404: The fourth device sends the ninth signal.

For example, the fourth device sends the ninth signal to a fifth device. Correspondingly, the fifth device receives the ninth signal from the fourth device.

In some embodiments, the fourth device serves as a receive end of the ninth signal. As shown in a dashed box in which 'Example 2' is located in FIG. 14, after performing S1402, the fourth device further performs the following operations.

S1405: The fourth device receives the ninth signal.

For example, the fifth device sends the ninth signal to the fourth device. Correspondingly, the fourth device receives the ninth signal from the fifth device.

S1406: The fourth device compensates for the non-linear distortion of the ninth signal by using the seventh compensation model.

For example, the seventh compensation model may be a post-compensation model. That is, after the first PA outputs the ninth signal, compensation processing is performed by using the seventh compensation model, to compensate for the non-linear distortion of the ninth signal.

For example, the seventh compensation model compensates for amplitude distortion and/or phase distortion.

For example, in FIG. 15, the fourth device is the device 2, and the device 2 performs step a7 to post-compensate for the non-linear distortion of the ninth signal.

For example, in FIG. 16, the fourth device is the device 1, and the device 1 performs step b4 to post-compensate for the non-linear distortion of the ninth signal.

It should be noted that, in this application, the compensation model may perform pre-compensation and post-compensation. In addition, the compensation model may compensate for amplitude distortion and phase distortion. There may be the following four manners:

Manner 1: A transmit-end device performs pre-compensation processing by using the compensation model, and a receive-end device performs post-compensation processing by using the compensation model.

The pre-compensation processing includes compensation for amplitude distortion, and the post-compensation processing includes compensation for phase distortion.

Alternatively, the pre-compensation processing includes compensation for phase distortion, and the post-compensation processing includes compensation for amplitude distortion.

Manner 2: A transmit-end device performs pre-compensation processing by using the compensation model.

The pre-compensation processing includes compensation for amplitude distortion and/or compensation for phase distortion.

Manner 3: A receive-end device performs post-compensation processing by using the compensation model.

The post-compensation processing includes compensation for amplitude distortion and/or compensation for phase distortion.

It should be noted that the transmit-end device is a signal that sends a signal, and the receive-end device is a device that receives a signal.

For example, the transmit-end device may be the device 1 in FIG. 15, and the receive-end device may be the device 2 in FIG. 15.

For another example, the transmit-end device may be the device 2 in FIG. 16, and the receive-end device may be the device 1 in FIG. 16.

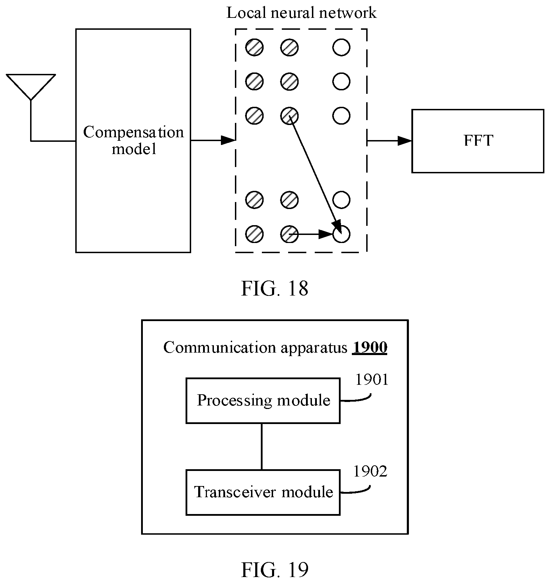

In addition, in some embodiments, when both amplitude distortion and phase distortion are compensated for, the compensation model may alternatively be used in combination with a local neural network, as shown in FIG. 17 or FIG. 18.

It may be understood that, in the foregoing embodiments, methods and/or steps implemented by the first device may alternatively be implemented by a component (for example, a processor, a chip, a chip system, a circuit, a logic module, or software) that may be used in the first device, methods and/or steps implemented by the second device may alternatively be implemented by a component (for example, a processor, a chip, a chip system, a circuit, a logic module, or software) that may be used in the second device, methods and/or steps implemented by the third device may alternatively be implemented by a component (for example, a processor, a chip, a chip system, a circuit, a logic module, or software) that may be used in the third device, methods and/or steps implemented by the fourth device may alternatively be implemented by a component (for example, a processor, a chip, a chip system, a circuit, a logic module, or software) that may be used in the fourth device, and methods and/or steps implemented by the fifth device may alternatively be implemented by a component (for example, a processor, a chip, a chip system, a circuit, a logic module, or software) that may be used in the fifth device. The chip system may include a chip, or the chip system may include a chip and another discrete device.

It may be understood that, to implement the foregoing functions, the communication apparatus includes a corresponding hardware structure and/or software module for performing the functions. A person skilled in the art should easily be aware that, with reference to units and algorithm steps of the examples described in embodiments disclosed in this specification, this application can be implemented by hardware or a combination of hardware and computer software. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, module division in embodiments of this application is an example, and is merely logical function division. During actual implementation, another division manner may be used.

FIG. 19 is a diagram of a structure of a communication apparatus 1900. The communication apparatus 1900 includes a processing module 1901 and a transceiver module 1902. The communication apparatus 1900 may be configured to implement a function of the first device. Alternatively, the communication apparatus 1900 may be configured to implement a function of the second device. Alternatively, the communication apparatus 1900 may be configured to implement a function of the third device. Alternatively, the communication apparatus 1900 may be configured to implement a function of the fourth device. Alternatively, the communication apparatus 1900 may be configured to implement a function of the fifth device.

In some embodiments, the communication apparatus 1900 may further include a storage module (not shown in FIG. 19), configured to store program instructions and data.

In some embodiments, the transceiver module 1902 may also be referred to as a transceiver unit, and is configured to implement a sending function and/or a receiving function. The transceiver module 1902 may include a transceiver circuit, a transceiver machine, a transceiver, or a communication interface.

In some embodiments, the transceiver module 1902 may include a receiving module and a sending module, which are respectively configured to perform receiving/sending type (for example, receiving and/or sending) steps performed by the first device, the second device, the third device, the fourth device, or the fifth device in the foregoing method embodiments, and/or configured to support another process of the technology described in this specification. The processing module 1901 may be configured to perform processing type (for example, determining) steps performed by the first device, the second device, the third device, the fourth device, or the fifth device in the foregoing method embodiments, and/or configured to support another process of the technology described in this specification.

All related content of the steps in the foregoing method embodiments may be cited in function descriptions of the corresponding functional modules. Details are not described herein again.

Optionally, in this application, the transceiver module receives/sends information, which may also be understood as that the processing module receives/sends the information via the transceiver module. That the processing module receives/sends the information via the transceiver module may also be understood as that the processing module controls the transceiver module to receive/send the information. Alternatively, that the processing module sends the information via the transceiver module may be understood as that the processing module outputs the information to the transceiver module, and the transceiver module sends the information; and that the processing module receives the information via the transceiver module may be understood as that the transceiver module receives the information and inputs the information to the processing module.

In this application, the communication apparatus 1900 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing function.

In some embodiments, when the communication apparatus 1900 in FIG. 19 is a chip or a chip system, a function/an implementation process of the transceiver module 1902 may be implemented by using an input/output interface (or a communication interface) of the chip or the chip system, and a function/an implementation process of the processing module 1901 may be implemented by using a processor (or a processing circuit) of the chip or the chip system.

Because the communication apparatus 1900 provided in this embodiment may perform the foregoing methods, for technical effects that can be achieved by the communication apparatus, refer to the foregoing method embodiments. Details are not described herein again.

In a possible product form, the first device, the second device, the third device, the fourth device, or the fifth device in embodiments of this application may alternatively be implemented by using one or more field programmable gate arrays (field programmable gate array, FPGA), a programmable logic device (programmable logic device, PLD), a controller, a state machine, gate logic, a discrete hardware component, any other appropriate circuit, or any combination of circuits that can perform the functions described throughout this application.

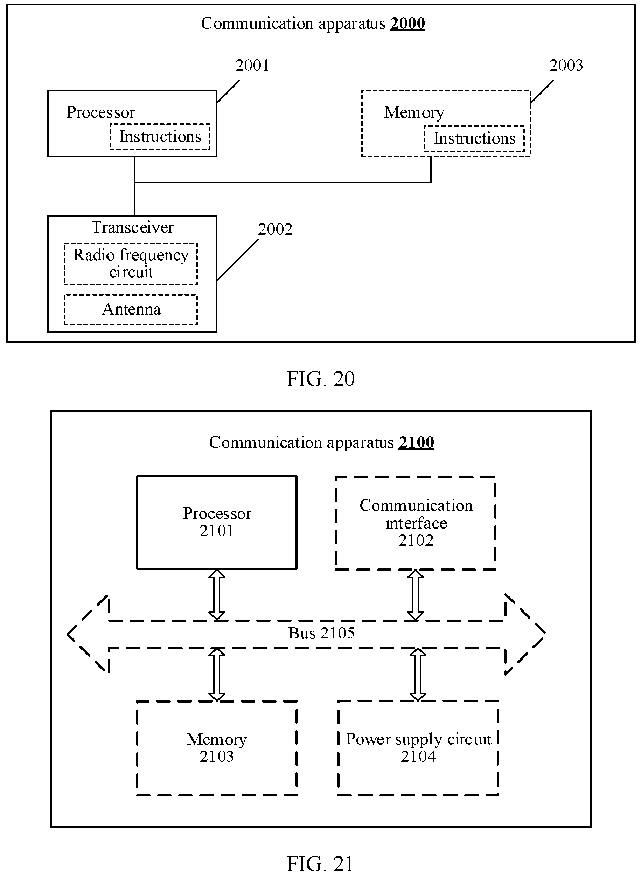

In another possible product form, the first device, the second device, the third device, the fourth device, or the fifth device in embodiments of this application may be implemented by using a general bus architecture. For ease of description, refer to FIG. 20. FIG. 20 is a diagram of a structure of a communication apparatus 2000 according to an embodiment of this application. The communication apparatus 2000 includes a processor 2001 and a transceiver 2002. The communication apparatus 2000 may be a first device, or a chip or a chip system in the first device. Alternatively, the communication apparatus 2000 may be a second device, or a chip or a module in the second device. Alternatively, the communication apparatus 2000 may be a third device, or a chip or a module in the third device. Alternatively, the communication apparatus 2000 may be a fourth device, or a chip or a module in the fourth device. Alternatively, the communication apparatus 2000 may be a fifth device, or a chip or a module in the fifth device.

FIG. 20 shows only main components of the communication apparatus 2000. In addition to the processor 2001 and the transceiver 2002, the communication apparatus 2000 may further include a memory 2003 and an input/output apparatus (not shown in the figure).

Optionally, the processor 2001 is mainly configured to: process a communication protocol and communication data, control the entire communication apparatus, execute a software program, and process data of the software program. The memory 2003 is mainly configured to store the software program and the data. The transceiver 2002 may include a radio frequency circuit and an antenna. The radio frequency circuit is mainly configured to perform conversion between a baseband signal and a radio frequency signal and process the radio frequency signal. The antenna is mainly configured to receive and send radio frequency signals in an electromagnetic wave form. The input/output apparatus, for example, a touchscreen, a display screen, or a keyboard, is mainly configured to receive data input by a user and output data to the user.

Optionally, the processor 2001, the transceiver 2002, and the memory 2003 may be connected by using a communication bus.

After the communication apparatus is powered on, the processor 2001 may read the software program in the memory 2003, interpret and execute instructions of the software program, and process the data of the software program. When data needs to be sent wirelessly, the processor 2001 performs baseband processing on the to-be-sent data, and then outputs a baseband signal to the radio frequency circuit. The radio frequency circuit performs radio frequency processing on the baseband signal, and then sends a radio frequency signal in the electromagnetic wave form by using the antenna. When data is sent to the communication apparatus, the radio frequency circuit receives a radio frequency signal by using the antenna, converts the radio frequency signal into a baseband signal, and outputs the baseband signal to the processor 2001: The processor 2001 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in hardware implementation, a person skilled in the art may figure out that the communication apparatus 1900 may be in a form of the communication apparatus 2000 shown in FIG. 20.

In an example, the function/implementation process of the processing module 1901 in FIG. 19 may be implemented by the processor 2001 in the communication apparatus 2000 shown in FIG. 20 by invoking computer-executable instructions stored in the memory 2003. The function/implementation process of the transceiver module 1902 in FIG. 19 may be implemented by the transceiver 2002 in the communication apparatus 2000 shown in FIG. 20.

In still another possible product form, the first device, the second device, the third device, the fourth device, or the fifth device in this application may use a composition structure shown in FIG. 21, or include components shown in FIG. 21. FIG. 21 is a diagram of composition of a communication apparatus 2100 according to this application.

As shown in FIG. 21, the communication apparatus 2100 includes at least one processor 2101. Optionally, the communication apparatus further includes a communication interface 2102.

When related program instructions are executed in the at least one processor 2101, the apparatus 2100 may be enabled to implement the method provided in any one of the foregoing embodiments and any possible design thereof. Alternatively, the processor 2101 is configured to implement, by using a logic circuit or executing code instructions, the method provided in any one of the foregoing embodiments and any possible design thereof.

The communication interface 2102 may be configured to receive the program instructions and transmit the program instructions to the processor. Alternatively, the communication interface 2102 may be configured to perform communication interaction between the communication apparatus 2100 and another communication device, for example, exchange control signaling and/or service data. For example, the communication interface 2102 may be configured to receive a signal from an apparatus other than the communication apparatus 2100, and transmit the signal to the processor 2101, or send a signal from the processor 2101 to a communication apparatus other than the communication apparatus 2100.

Optionally, the communication interface 2102 may be a code and/or data reading/writing interface circuit, or the communication interface 2102 may be a signal transmission interface circuit between a communication processor and a transceiver, or may be a pin of a chip.

Optionally, the communication apparatus 2100 may further include at least one memory 2103, and the memory 2103 may be configured to store necessary program instructions and/or data. It should be noted that the memory 2103 may be independent of the processor 2101, or may be integrated with the processor 2101. The memory 2103 may be located inside the communication apparatus 2100, or may be located outside the communication apparatus 2100. This is not limited.

Optionally, the communication apparatus 2100 may further include a power supply circuit 2104, and the power supply circuit 2104 may be configured to supply power to the processor 2101. The power supply circuit 2104 may be located in a same chip as the processor 2101, or may be located in a chip other than a chip in which the processor 2101 is located.

Optionally, the communication apparatus 2100 may further include a bus 2105, and parts of the communication apparatus 2100 may be interconnected by using the bus 2105.

In some embodiments, in hardware implementation, a person skilled in the art may figure out that the communication apparatus 1900 shown in FIG. 19 may be in a form of the communication apparatus 2100 shown in FIG. 21.

In an example, the function/implementation process of the processing module 1901 in FIG. 19 may be implemented by the processor 2101 in the communication apparatus 2100 shown in FIG. 21 by invoking computer-executable instructions stored in the memory 2103. The function/implementation process of the transceiver module 1902 in FIG. 19 may be implemented by the communication interface 2102 in the communication apparatus 2100 shown in FIG. 21.

It should be noted that the structure shown in FIG. 21 does not constitute a specific limitation on the first device, the second device, the third device, the fourth device, or the fifth device. For example, in some other embodiments of this application, the first device, the second device, the third device, the fourth device, or the fifth device may include more or fewer components than those shown in the figure, or have some components combined, or have some components split, or have a different component arrangement. The components shown in the figure may be implemented by hardware, software, or a combination of software and hardware.

Optionally, the processor in this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

Optionally, the memory in this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of random access memories (random access memory, RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Optionally, the power supply circuit in this embodiment of this application includes but is not limited to at least one of the following: a power supply line, a power supply subsystem, a power management chip, a power consumption management processor, or a power consumption management control circuit.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and necessary data. The computer program may include instructions. The processor may invoke the instructions in the computer program stored in the memory, to instruct the communication apparatus to perform the method in any one of the foregoing method embodiments. Certainly, the communication apparatus may not include the memory.

In another possible implementation, the communication apparatus further includes an interface circuit. The interface circuit is a code/data reading/writing interface circuit, and the interface circuit is configured to receive computer-executable instructions (the computer-executable instructions are stored in a memory, and may be read from the memory directly or via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in this embodiment of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed operating process of the foregoing described system, apparatus, and unit, refer to a corresponding process in the foregoing method embodiments. Details are not described herein again.

It may be understood that the system, apparatus, and method described in this application may alternatively be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, that is, may be located in one place, or may be distributed on a plurality of network units. Parts displayed as units may or may not be physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

The foregoing embodiments may be all or partly implemented by using software, hardware, firmware, or any combination thereof. When implemented by using a software program, the embodiments may be all or partly implemented in a form of a computer program product. The computer program product includes one or more computer instructions. When the computer program instructions are loaded and executed on a computer, the procedure or functions according to embodiments of this application are all or partly generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described herein with reference to embodiments, in a process of implementing this application that claims protection, a person skilled in the art may understand and implement other variations of the disclosed embodiments by viewing the accompanying drawings, disclosed content, and the accompanying claims. In the claims, "comprising" (comprising) does not exclude another component or step, and "a" or "an" does not exclude a plural case. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as covering any and all modifications, variations, combinations, or equivalents within the scope of this application. It is clear that a person skilled in the art can make various modifications and variations to this application without departing from the scope of this application. Therefore, this application is intended to cover these modifications and variations of this application provided that they fall within the scope of the claims of this application and equivalent technologies thereof.

**Claims**

1. A communication method, comprising:

   receiving a first signal and first information, wherein the first signal is a signal obtained by a first power amplifier PA through amplification processing using a first gain, and the first information indicates the first gain; and
   determining a first compensation model based on the first signal and the first gain, wherein the first compensation model is used to compensate for non-linear distortion, and the non-linear distortion comprises non-linear distortion caused to a signal by the first PA in a process of performing amplification processing by using the first gain.

2. The method according to claim 1, wherein
   the first signal comprises a signal obtained by the first PA through amplification processing using the first gain in a non-linear region.

3. The method according to claim 1, wherein

   the first signal comprises a first reference signal and a second reference signal;
   the first reference signal and the second reference signal are adjacent in time domain and/or frequency domain;
   power of the first reference signal is first power, and the first power is in a linear region of the first PA; and
   power of the second reference signal is second power, and the second power is in a non-linear region of the first PA.

4. The method according to any one of claims 1 to 3, wherein
   the first gain is associated with a first operating state of the first PA, and the first operating state is an operating state when the first PA performs amplification processing on the first signal by using the first gain.

5. The method according to any one of claims 1 to 4, wherein
   the non-linear distortion comprises non-linear distortion caused to a signal by the first PA in the first operating state in a process of performing amplification processing by using the first gain.

6. The method according to claim 4 or 5, wherein
   the first operating state comprises at least one of the following: an operating frequency of the first PA, an operating bandwidth of the first PA, a temperature of the first PA, output power of the first PA, or a radio access technology RAT used by the first PA.

**7.** The method according to any one of claims 4 to 6, wherein the method further comprises:

receiving a second signal and second information, wherein the second signal is a signal obtained by the first PA in a second operating state through amplification processing using a second gain, and the second information indicates the second gain; and
determining a second compensation model based on the second signal and the second gain, wherein
the second compensation model is used to compensate for non-linear distortion, and the non-linear distortion compensated for by the second compensation model comprises non-linear distortion caused to a signal by the first PA in the second operating state in a process of performing amplification processing by using the second gain.

**8.** The method according to claim 7, wherein
the first compensation model is at least partially the same as the second compensation model.

**9.** The method according to any one of claims 1 to 8, wherein the method further comprises:

receiving a third signal and third information, wherein the third signal is a signal obtained by a second PA through amplification processing using a third gain, and the third information indicates the third gain; and
determining a third compensation model based on the third signal and the third gain, wherein
the third compensation model is used to compensate for non-linear distortion, and the non-linear distortion compensated for by the third compensation model comprises non-linear distortion caused to a signal by the second PA in a process of performing amplification processing by using the third gain; and
the first PA and the second PA have different hardware structures, and the first compensation model is at least partially different from the third compensation model.

**10.** The method according to any one of claims 1 to 9, wherein
that the first compensation model is used to compensate for non-linear distortion comprises:

the first compensation model is used to compensate for the non-linear distortion after the first PA performs the amplification processing process by using the first gain; or
the first compensation model is used to compensate for the non-linear distortion before the first PA performs the amplification processing process by using the first gain.

**11.** The method according to any one of claims 1 to 10, wherein
that the first compensation model is used to compensate for non-linear distortion comprises:
the first compensation model comprises a phase distortion compensation model and/or an amplitude distortion compensation model, the phase distortion compensation model is used to compensate for phase distortion in the non-linear distortion, and the amplitude distortion compensation model is used to compensate for amplitude distortion in the non-linear distortion.

**12.** The method according to any one of claims 1 to 11, wherein
the non-linear distortion compensated for by the first compensation model comprises phase distortion; and

the first compensation model meets:

$$f_{AM-PM}(x) = -\frac{Ax^q}{\left(1 + \left(\frac{x}{B}\right)^q\right)}$$

wherein $x$ represents an amplitude of an input signal of the first compensation model, $f_{AM-PM}(x)$ represents an output signal of the first compensation model, and $A$, $B$, and $q$ represent model parameters of the first compensation model; or
the first compensation model meets:

$$f_{AM-PM}(x) = -(p_0 + p_1 x^1 + p_2 x^2 + \cdots + p_9 x^9)$$

wherein $x$ represents an amplitude of an input signal of the first compensation model, $f_{AM-PM}(x)$ represents an output signal of the first compensation model, and $p_0$, $p_1$, ... , and $p_9$ represent model parameters of the first compensation model.

13. The method according to any one of claims 1 to 11, wherein
the non-linear distortion compensated for by the first compensation model comprises amplitude distortion; and

the first compensation model meets:

$$f_{AM-AM}(x) = \frac{x}{\left(1 - \left(\frac{Gx}{V}\right)^{2p}\right)^{\frac{1}{2p}}}$$

wherein $x$ represents an amplitude of an input signal of the first compensation model, $f_{AM-AM}(x)$ represents an output signal of the first compensation model, and $G$, $V$, and $p$ represent model parameters of the first compensation model; or
the first compensation model meets:

$$f_{AM-AM}(x) = (a_0 + a_1 x^1 + a_2 x^2 + \cdots + a_9 x^9)$$

wherein x represents an amplitude of an input signal of the first compensation model, $F_{AM-AM}(x)$ represents an output signal of the first compensation model, and $a_0$, $a_1$, ..., and $a_9$ represent model parameters of the first compensation model.

14. The method according to any one of claims 1 to 13, wherein the first signal is a signal below 6 GHz, or the first signal is a signal above 6 GHz.

15. The method according to any one of claims 1 to 14, wherein
the determining the first compensation model based on the first signal and the first gain comprises:

determining an ideal linearly amplified signal based on the first gain; and
determining the first compensation model based on a difference between the first signal and the ideal signal.

16. The method according to any one of claims 1 to 15, wherein after the determining the first compensation model based on the first signal and the first gain, the method further comprises:
sending a first parameter, wherein the first parameter indicates the difference between the first signal and the ideal signal.

17. A communication method, comprising:

determining a first signal and first information, wherein the first signal is a signal obtained by a first power amplifier PA through amplification processing using a first gain, and the first information indicates the first gain; and
sending the first signal and the first information.

18. The method according to claim 17, wherein
the first gain is associated with a first operating state of the first PA, and the first operating state is an operating state when the first PA performs amplification processing on the first signal by using the first gain.

19. The method according to claim 17 or 18, wherein
the first signal is a signal obtained by the first PA in the first operating state through amplification processing using the first gain.

20. The method according to claim 18 or 19, wherein
the first operating state comprises at least one of the following: an operating frequency of the first PA, an operating bandwidth of the first PA, a temperature of the first PA, output power of the first PA, or a radio access technology RAT used by the first PA.

21. The method according to any one of claims 18 to 20, wherein the method further comprises:

   determining a second signal and second information, wherein the second signal is a signal obtained by the first PA in a second operating state through amplification processing using a second gain, and the second information indicates the second gain; and
   sending the second signal and the second gain.

22. The method according to any one of claims 17 to 21, wherein the method further comprises:

   determining a third signal and third information, wherein the third signal is a signal obtained by a second PA through amplification processing using a third gain, the first PA and the second PA have different hardware structures, and the third information indicates the third gain; and
   sending the third signal and the third gain.

23. The method according to any one of claims 17 to 22, wherein after the sending the first signal and the first information, the method further comprises:
   receiving a first parameter, wherein the first parameter indicates a difference between the first signal and an ideal signal.

24. A communication apparatus, wherein the apparatus comprises a module configured to perform the method according to any one of claims 1 to 16.

25. A communication apparatus, wherein the apparatus comprises a module configured to perform the method according to any one of claims 17 to 23.

26. A communication apparatus, wherein the communication apparatus comprises a processor and a memory, the memory is configured to store computer instructions, and when the processor executes the instructions, the communication apparatus is enabled to perform the method according to any one of claims 1 to 23.

27. A computer-readable storage medium, wherein the computer-readable storage medium comprises a computer program or instructions, and when the computer program or the instructions are run on a computer, the method according to any one of claims 1 to 23 is performed.

28. A computer program product, wherein the computer program product comprises instructions, and when the instructions are run on a computer, the method according to any one of claims 1 to 23 is performed.

29. A chip, wherein the chip comprises a processor, and the processor is configured to run instructions, to enable an apparatus comprising the chip to perform the method according to any one of claims 1 to 23.

FIG. 1

FIG. 2

FIG. 3

FIG. 4

FIG. 5

600

| First device | | Second device |
|---|---|---|

S601: First signal and first information, where
the first signal is a signal obtained by a first PA through
amplification processing using a first gain, and
the first information indicates the first gain

S602: Determine a first compensation model based on the first
signal and the first gain

S603: First parameter, where
the first parameter indicates a difference between the
first signal and an ideal signal

FIG. 6

| First device | | Second device |
|---|---|---|

S701: Second signal and second information, where
the second signal is a signal obtained by a first PA in a
second operating state through amplification processing
using a second gain, and the second information
indicates the second gain

S702: Determine a second compensation model based on the
second signal and the second gain

FIG. 7

| First device | | Third device |
|---|---|---|

S801: Third signal and third information, where
the third signal is a signal obtained by a second PA
through amplification processing using a third gain, and
the third information indicates the third gain

S802: Determine a third compensation model based on the third
signal and the third gain

FIG. 8

| First device | | Second device |
| --- | --- | --- |

S901: Fourth signal and fourth information, where the fourth signal is a signal obtained by a first PA through amplification processing using a first gain, and the fourth information indicates the first gain

S902: Determine a detection result of a first compensation model based on the fourth signal and the first gain, where the detection result of the first compensation model indicates whether the first compensation model runs normally

S903: Detection result of the first compensation model

S904: Second parameter, where the second parameter indicates a difference between the fourth signal and an ideal signal

FIG. 9

**1000**

| First device | | Second device |
| --- | --- | --- |

S1001: Fifth signal, where the fifth signal is a signal obtained by a first PA through amplification processing

S1002: Fifth information, where the fifth information indicates a difference between the fifth signal and a first ideal signal

S1003: Determine a fourth compensation model based on the difference between the fifth signal and the first ideal signal

FIG. 10

| First device | | Second device |
|---|---|---|

S1101: Sixth signal, where
the sixth signal is a signal obtained by a first PA in a
second operating state through amplification processing

S1102: Sixth information, where
the sixth information indicates a difference between the
sixth signal and a second ideal signal

S1103: Determine a fifth compensation model based on the
difference between the sixth signal and the second ideal signal

FIG. 11

| First device | | Third device |
|---|---|---|

S1201: Seventh signal, where
the seventh signal is a signal obtained by a second PA
through amplification processing

S1202: Seventh information, where
the seventh information indicates a difference between
the seventh signal and a third ideal signal

S1203: Determine a sixth compensation model based on the
difference between the seventh signal and the third ideal signal

FIG. 12

| First device | | Second device |
|---|---|---|

S1301: Eighth signal, where
the eighth signal is a signal obtained by a first PA
through amplification processing

S1302: Eighth information, where
the eighth information indicates a difference between
the eighth signal and a fourth ideal signal

S1303: Determine a detection result of a fourth compensation
model based on the difference between the eighth signal and the
fourth ideal signal, where the detection result of the fourth
compensation model indicates whether the fourth compensation
model runs normally

S1304: Detection result of the fourth compensation model

FIG. 13

```
┌─────────────────────┐                              ┌─────────────────────┐
│    Fourth device    │                              │     Fifth device    │
└──────────┬──────────┘                              └──────────┬──────────┘
┌──────────┴──────────────────────────────────────────────┐    │
│          S1401: Obtain ninth information, where          │    │
│     the ninth information is associated with a ninth signal, and  │
│  the ninth signal is a signal obtained by a first PA through amplification │
│                       processing                         │    │
└──────────┬───────────────────────────────────────────────┘   │
┌──────────┴───────────────────────────────────────────────┐   │
│    S1402: Select a seventh compensation model from at least two   │
│     compensation models based on the ninth information    │   │
└──────────┬───────────────────────────────────────────────┘   │
```

S1403: Perform compensation processing by using the seventh
compensation model, to obtain the ninth signal

S1404: Ninth signal

Example 1

S1405: Ninth signal

Example 2

S1406: Compensate for non-linear distortion of the ninth signal by using
the seventh compensation model

FIG. 14

```
┌─────────────────────┐                              ┌─────────────────────┐
│      Device 1       │                              │      Device 2       │
└──────────┬──────────┘                              └──────────┬──────────┘
```

Step a1: Determine ninth information

Step a2: Select a seventh compensation model from at least two
compensation models based on the ninth information

Step a3: Perform compensation processing by using the seventh
compensation model, to obtain a ninth signal

Step a4: Ninth signal

Step a5: Ninth information

Step a6: Select the seventh compensation model from at least two
compensation models based on the ninth information

Step a7: Compensate for non-linear distortion of the ninth signal by using
the seventh compensation model

FIG. 15

| Device 1 | | Device 2 |
|---|---|---|

Step b1: Ninth signal

Step b2: Determine ninth information

Step b3: Select a seventh compensation model from at least two compensation models based on the ninth information

Step b4: Compensate for non-linear distortion of the ninth signal by using the seventh compensation model

Step b5: Ninth information

Step b6: Select the seventh compensation model from at least two compensation models based on the ninth information

Step b7: Perform compensation processing by using the seventh compensation model

FIG. 16

Local neural network

IFFT → Compensation model → PA

FIG. 17

Local neural network

FIG. 18

FIG. 19

Communication apparatus **2000**

2001

Processor

Instructions

2003

Memory

Instructions

Transceiver

2002

Radio frequency
circuit

Antenna

FIG. 20

Communication apparatus **2100**

Processor
2101

Communication
interface
2102

Bus 2105

Memory
2103

Power supply circuit
2104

FIG. 21

## INTERNATIONAL SEARCH REPORT

| International application No. |
|---|
| **PCT/CN2024/113172** |

| A. | CLASSIFICATION OF SUBJECT MATTER |
|---|---|

H04B 1/04(2006.01)i

According to International Patent Classification (IPC) or to both national classification and IPC

| B. | FIELDS SEARCHED |
|---|---|

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNTXT: CNKI: VEN; ENTXTC; 3GPP: 功率放大器, 失真, 非线性, 线性, 放大, 理想, 差异, 差别, 不同, 补偿, 神经网络, power amplifier, PA, distortion, nonlinear, linear, expect+, difference, compensat+, neural network

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 20210091669 A (EUCAST CO., LTD.) 22 July 2021 (2021-07-22) description, paragraphs 50-91 | 1, 2, 4-11, 14, 15, 17-22, 24-29 |
| A | CN 105846785 A (ZGMICRO CORP.) 10 August 2016 (2016-08-10) entire document | 1-29 |
| A | CN 1689295 A (ZTE CORP.) 26 October 2005 (2005-10-26) entire document | 1-29 |
| A | US 2005258898 A1 (HONGO, N.) 24 November 2005 (2005-11-24) entire document | 1-29 |
| A | US 2023006611 A1 (MEDIATEK INC.) 05 January 2023 (2023-01-05) entire document | 1-29 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 November 2024** | **08 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/113172**

| Patent document cited in search report | | | Publication date (day/month/year) | Patent family member(s) | | | Publication date (day/month/year) |
|---|---|---|---|---|---|---|---|
| KR | 20210091669 | A | 22 July 2021 | KR | 102550079 | B1 | 03 July 2023 |
| CN | 105846785 | A | 10 August 2016 | None | | | |
| CN | 1689295 | A | 26 October 2005 | AU | 2002344035 | A1 | 25 May 2004 |
| | | | | WO | 2004040870 | A1 | 13 May 2004 |
| | | | | DE | 60235127 | D1 | 04 March 2010 |
| | | | | ATE | 455422 | T1 | 15 January 2010 |
| | | | | EP | 1573993 | A1 | 14 September 2005 |
| | | | | EP | 1573993 | A4 | 05 July 2006 |
| | | | | EP | 1573993 | B1 | 13 January 2010 |
| | | | | US | 2006240786 | A1 | 26 October 2006 |
| | | | | US | 7583754 | B2 | 01 September 2009 |
| | | | | JP | 2006505160 | A | 09 February 2006 |
| | | | | JP | 4091047 | B2 | 28 May 2008 |
| US | 2005258898 | A1 | 24 November 2005 | US | 7170345 | B2 | 30 January 2007 |
| | | | | JP | 2005333353 | A | 02 December 2005 |
| | | | | JP | 4417174 | B2 | 17 February 2010 |
| US | 2023006611 | A1 | 05 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311273519